# EUROPEAN PATENT APPLICATION

(11) **EP 2 613 599 A1**
(43) Date of publication of application: **10.07.2013**
(21) Application number: 11821270.3
(22) Date of filing: 19.08.2011
(51) Int. Cl.: H04W 72/04, H04J 11/00

(54) **BASE STATION AND CONTROL INFORMATION TRANSMISSION METHOD**

(30) Priority: 03.09.2010 JP 2010197772
(71) Applicant: Panasonic Corporation, Osaka 571-8501 (JP)
(72) Inventor: NISHIO, Akihiko, Chuo-ku Osaka 540-6207 (JP); MATSUO, Hidenori, Chuo-ku Osaka 540-6207 (JP); HORIUCHI, Ayako, Chuo-ku Osaka 540-6207 (JP); IMAMURA, Daichi, Chuo-ku Osaka 540-6207 (JP)
(74) Representative: Grünecker, Kinkeldey, Stockmair & Schwanhäusser
(86) International application number: PCT/JP2011/004630
(87) International publication number: WO 2012/029245

(57) **Abstract**

This base station is capable of suppressing degradation of data throughput even when a DCI for a terminal connected to the base station is transmitted via an R-PDCCH region. In this base station, a PDCCH generation unit (104) generates control information transmitted via a first control channel that is mapped to the same resource region as a resource region to which data for the terminal (200) is allocated, or control information transmitted via a second control channel that is mapped to a resource region that differs from the abovementioned resource region. A transmission RF unit (112) transmits the generated control information. Here, the amount of control information in the first control channel is less than the amount of control information in the second control channel.

## Description

### Technical Field

The claimed invention relates to a base station and a method for transmitting control information.

### Background Art

In 3rd generation partnership project radio access network long term evolution (3GPP-LTE) (hereinafter, referred to as "LTE"), orthogonal frequency division multiple access (OFDMA) is adopted as a downlink communication scheme, and single carrier frequency division multiple access (SC-FDMA) is adopted as an uplink communication scheme (e.g., see Non-Patent Literatures 1, 2 and 3.)

In LTE, a radio communication base station apparatus (hereinafter, abbreviated as "base station") communicates with a radio communication terminal apparatus (hereinafter, abbreviated as "terminal") through allocation of resource blocks (RBs) in a system band to terminals, per time unit referred to as "subframe." The base station also transmits, to the terminal, allocation control information (i.e., L1/L2 control information) to notify the result of resource allocation for downlink data and uplink data. This allocation control information is transmitted to the terminal through downlink control channels, such as physical downlink control channel (PDCCH).

Each PDCCH occupies a resource composed of one or more contiguous control channel elements (CCEs). In LTE, the number of CCEs (i.e., the number of connected CCEs) (hereinafter, referred to as "CCE aggregation level" or "aggregation level") occupied by the PDCCH is set by selecting one of the numbers 1, 2, 4, and 8, depending on the number of information bits in the allocation control information or the condition of propagation paths of the terminal. LTE supports a frequency band with a maximum width of 20 MHz as a system bandwidth.

The allocation control information transmitted from a base station is referred to as downlink control information (DCI). The base station transmits a plurality of pieces of DCI at the same time when allocating a plurality of terminals to a single subframe. In this case, the base station includes CRC bits, which are masked (or scrambled) with each ID of target terminals, in each piece of DCI in order to identify each target terminal of the DCI, and transmits the DCI. Then, the terminal performs blind decoding on a plurality of pieces of DCI, which may be addressed to the terminal by demasking (or descrambling) the CRC bits with a terminal ID of the terminal, and detects the DCI addressed to the terminal.

In addition, DCI includes modulation and channel coding scheme (MCS), information on resource allocated to a terminal by a base station (i.e., resource allocation information), or the like. DCI also has a plurality of formats, such as a format for uplink, a format for downlink multiple input multiple output (MIMO) transmission, a format for downlink non-contiguous band allocation, or the like. Accordingly, a terminal is required to receive both of downlink allocation control information including a plurality of formats (i.e., allocation control information related to downlink) and uplink allocation control information (allocation control information related to uplink).

For example, the downlink control information (DCI) involves a plurality of different size formats, depending on a method of controlling a transmission antenna, a method of allocating resources of a base station, or the like. In a plurality of formats, a downlink allocation control information format (hereinafter, simply referred to as "contiguous band allocation downlink format"), which performs band allocation of allocating RBs with continuous numbers (hereinafter, referred to as "contiguous band allocation"), has the same size as an uplink allocation control information format (hereinafter, simply referred to as "contiguous band allocation uplink format"), which performs contiguous band allocation. These formats (i.e., DCI formats) include type information (e.g., a flag of one bit) indicating the type of allocation control information (i.e., downlink allocation control information or uplink allocation control information). Thus, the terminal can specify whether the DCI is downlink allocation control information or uplink allocation control information, through confirmation of the type information included in the allocation control information, even when the contiguous band allocation downlink format has the same size as the contiguous band allocation uplink format.

For example, the contiguous band allocation downlink format is referred to as "DCI format 0 (hereinafter, referred to as "DCI 0")," and the contiguous band allocation uplink format is referred to as "DCI format 1A (hereinafter, referred to as "DCI 1A")." As described above, DCI 0 and DCI 1A have the same size and can be distinguished according to the type information. DCI 0 and DCI 1A are therefore represented together as "DCI 0/1A" in the following description.

Other than the contiguous band allocation downlink format and contiguous band allocation uplink format, the DCI formats also involve: a format of downlink allocation control information used for performing band allocation (hereinafter, referred to as "non-contiguous band allocation") of allocating RBs with discontinuous numbers (i.e., "non-contiguous band allocation": "DCI format 1" referred to as "DCI 1"); a format of downlink allocation control information used for allocating spatial multiplexing MIMO transmission (i.e., "spatial multiplexing MIMO downlink format": "DCI format 2, 2A" referred to as "DCI 2, 2A"); a format of downlink allocation control information used for allocating beam forming transmission (i.e., "beam forming allocation downlink format": "DCI format 1B"); and a format of downlink allocation control information used for allocating multiuser MIMO transmission (i.e., "multiuser MIMO allocation downlink format": "DCI format 1D"), for example. DCIs 1, 2, 2A, 1B, and 1D are formats used depending on downlink transmission modes of terminals (i.e., non-contiguous band allocation, spatial multiplexing MIMO transmission, beam forming transmission, and multiuser MIMO transmission). In other words, DCIs 1, 2, 2A, 1B, and 1D are formats set for each terminal. In contrast, DCI 0/1A is a format that can be used for a terminal in any transmission mode, without depending on a transmission mode. In other words, DCI 0/1A is the format commonly used for all terminals. When DCI 0/1A is used, single-antenna transmission or transmit diversity is adopted as a default transmission mode. In contrast, studies are underway to use DCI format 0A, which performs non-contiguous band allocation, and DCI format 0B, which allocates spatial multiplexing MIMO transmission, as formats for uplink allocation. Those formats are set for each terminal.

In addition, a method of limiting CCEs subject to blind decoding for each terminal has been discussed for the purpose of reducing the number of blind decoding attempts in order to decrease the circuit scale of a terminal. This method limits a CCE region that may be a target of the blind decoding performed by each terminal (hereinafter, referred to as "search space"). A unit of the CCE region allocated to each terminal (i.e., equivalent to a unit targeted for the blind decoding) is referred to as "downlink control information allocation region candidate (i.e., DCI allocation region candidate)" or "blind decoding region candidate."

In LTE, a search space is randomly set for each terminal. The number of CCEs forming the search space is defined per a CCE aggregation level of PDCCH. For example, the numbers of CCEs forming the search space are 6, 12, 8, and 16, corresponding to the CCE aggregation levels of PDCCHs 1, 2, 4, and 8, respectively. In this case, the numbers of blind decoding region candidates are six (6=6÷1), six (6=12÷2), two (2=8÷4), and two (2=16÷8), corresponding to the CCE aggregation levels of PDCCHs 1, 2, 4, and 8, respectively. In other words, the number of the blind decoding region candidates is limited to sixteen in total. Consequently, the number of blind decoding attempts can be reduced since each terminal needs to perform the blind decoding only on a blind decoding region candidate group in the search space allocated to the terminal. In this case, the search space of each terminal is set using a terminal ID of each terminal and a hash function of performing randomization. This terminal-specific CCE region is referred to as "UE specific search space (UE-SS)."

Meanwhile, PDCCH also includes control information that is notified to a plurality of terminals at the same time and is used for data allocation common to all terminals (e.g., allocation information on downlink broadcast signals and allocation information on paging signals) (hereinafter, referred to as "control information for a common channel"). A CCE region common to all terminals that need to receive the downlink broadcast signals (hereinafter, referred to as "common search space (C-SS)") is used for PDCCH, in order to transmit the control information for a common channel. In C-SS, only six blind decoding region candidates exist in total; four candidates (4=16÷4) and two candidates (2=16÷8), corresponding to CCE aggregation levels 4 and 8, respectively.

In UE-SS, a terminal performs blind decoding for two DCI formats having different sizes, i.e., a first type of DCI format (DCI 0/1A) commonly used for all terminals and a second type of DCI format (DCIs 1, 2, 2A, or the like) depending on a transmission mode. For example, in UE-SS, a terminal performs blind decoding thirty-two times in total, since the terminal performs the blind decoding on sixteen blind decoding region candidates for each of the first type of DCI format (DCI 0/1A) and the second type of DCI format (DCIs 1, 2, 2A, or the like) that have different sizes. In addition, in C-SS, the terminal performs blind decoding twelve times in total since the terminal performs the blind decoding on the above described six blind decoding region candidates for each of DCI 1A and DCI format 1C used for a common channel allocation (hereinafter, referred to as "DCI 1C"). In other words, the terminal performs the blind decoding forty-four times in total on a subframe basis.

In this case, DCI 1A used for a common channel allocation and DCI 0/1A used for terminal-specific data allocation have the same size and are distinguished by a terminal ID. Accordingly, even in C-SS, a base station can transmit DCI 0/1A used for terminal-specific data allocation without increasing the number of blind decoding attempts in the terminal.

In the meantime, the standardization of 3GPP LTE-Advanced (hereinafter, referred to as "LTE-A") has been started, which achieves faster communication than LTE. In LTE-A, introducing a base station and a terminal (hereinafter, referred to as "LTE-A terminal") that can communicate with each other through a wideband frequency of 40 MHz or more is expected in order to achieve the maximum downlink transmission speed of 1 Gbps or more and the maximum uplink transmission speed of 500 Mbps or more. An LTE-A system is required to accommodate not only LTE-A terminals but also terminals supporting an LTE system (hereinafter, referred to as "LTE terminals").

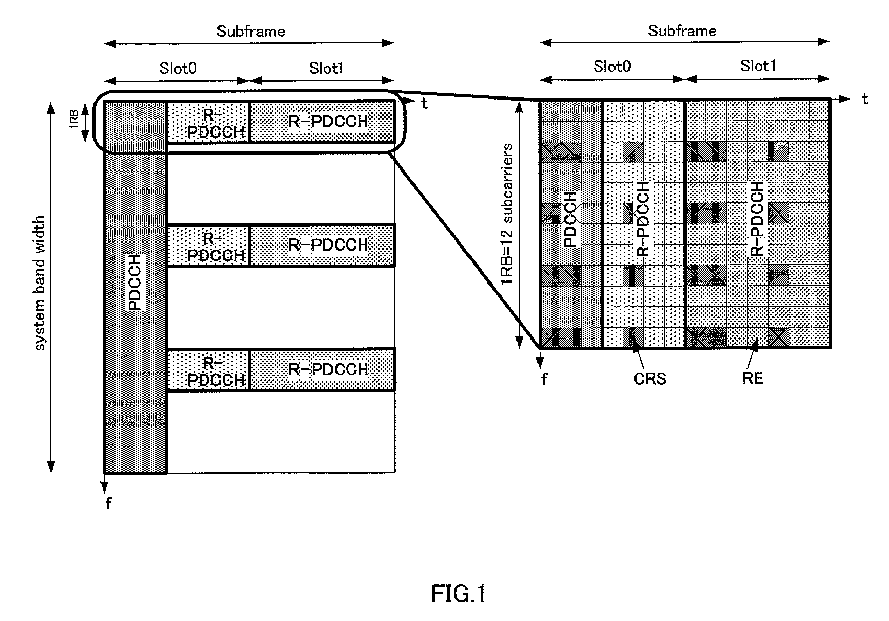

Furthermore, in LTE-A, introducing a radio communication relay apparatus (hereinafter, referred to as "relay station" or "relay node (RN)") is defined in order to achieve enhancement of coverage. Accordingly, standardization of downlink control channel from a base station to a relay station (hereinafter, referred to as "R-PDCCH") is advanced (e.g., see Non-Patent Literatures 4, 5, 6, and 7). As for R-PDCCH, the following matters are considered in the present stage. FIG.1 shows an example resource region on which R-PDCCH is mapped (hereinafter, referred to as "R-PDCCH region").
(1) The position to start mapping in the time domain direction of R-PDCCH is fixed to the fourth OFDM symbol from the beginning of a single subframe. This enables a relay station to transmit common reference signals (CRS) and DCI to terminals connected with the relay station (i.e., terminals under the relay station) and to receive signals from a base station in an R-PDCCH region, in each subframe.
(2) Each R-PDCCH occupies a resource formed by single or a plurality of contiguous relay-control channel elements (R-CCEs). The number of REs forming a single R-CCE differs every slot or every arrangement of reference signals. Specifically, in slot 0, R-CCE is defined as a resource region that has a range from the fourth OFDM symbol from the beginning of a single subframe to the end of slot 0 in a time direction and has the width of 1 RB in a frequency direction (provided that regions on which reference signals are mapped are excluded). Additionally, in slot 1, R-CCE is defined as a resource region that has a range from the start of slot 1 to the end of slot 1 in the time direction and has the width of 1 RB in the frequency direction (provided that regions on which reference signals are mapped is excluded). However, a proposal has also been made in which the above described resource region in slot 1 is divided into two parts and defining each part as a single R-CCE.

### Citation List

### Non-Patent Literature

NPL 1
   3GPP TS 36.211 V9.1.0, "Physical Channels and Modulation (Release 9)," May 2010
NPL 2
   3GPP TS 36.212 V9.2.0, "Multiplexing and channel coding (Release 9)," June 2010
NPL 3
   3GPP TS 36.213 V9.2.0, "Physical layer procedures (Release 9)," June 2010
NPL 4
   3GPP TSG RAN WG1 meeting, R1-102700, "Backhaul Control Channel Design in Downlink," May 2010
NPL 5
   3GPP TSG RAN WG1 meeting, R1-102881, "R-PDCCH placement," May 2010
NPL 6
   3GPP TSG RAN WG1 meeting, R1-103040, "R-PDCCH search space design" May 2010
NPL 7
   3GPP TSG RAN WG1 meeting, R1-103062, "Supporting frequency diversity and frequency selective R-PDCCH transmissions" May 2010

### Summary of Invention

### Technical Problem

In the future, introducing various devices for machine to machine (M2M) communication or the like, as radio communication terminals may lead to a resource shortage of the regions on which PDCCH is to be mapped (hereinafter, referred to as "PDCCH region"). When PDCCH cannot be mapped due to this resource shortage, downlink data cannot be allocated to terminals. Consequently, system throughput may be reduced since a resource region on which downlink data is to be mapped (hereinafter, referred to as "PDSCH region") cannot be used even when the resource region is vacant.

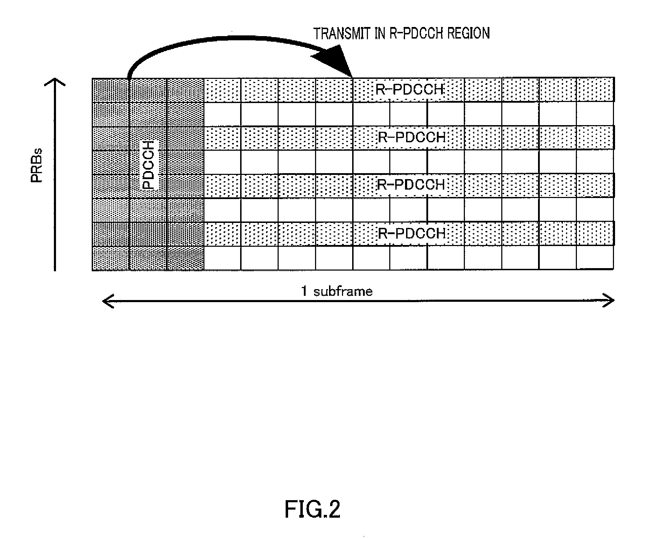

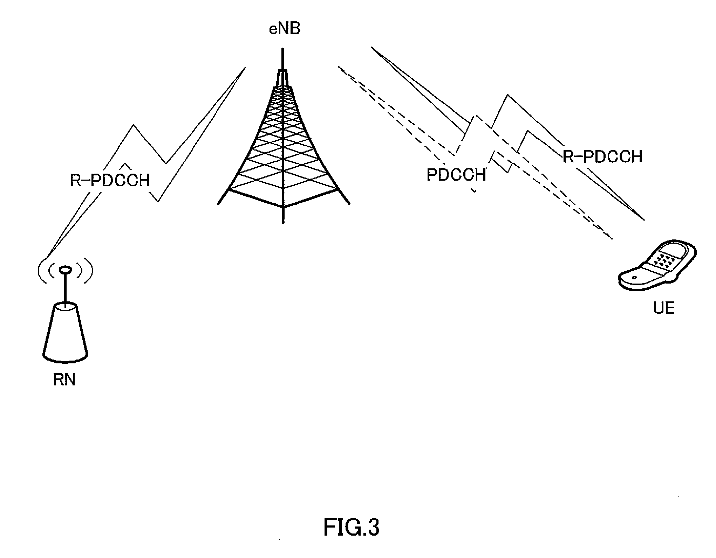

A possible method of resolving this resource shortage involves arranging the DCI addressed to terminals connected with a base station (i.e., terminals under the base station) to the above described R-PDCCH region, in addition to a PDCCH region (see, FIGs.2 and 3).

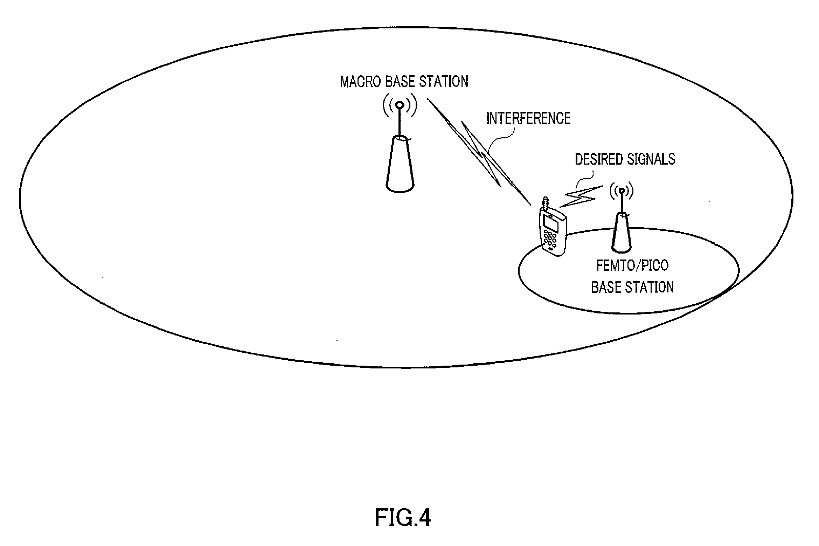

A heterogeneous network as shown in FIG.4 has been studied, the network composed of a macro cell (e.g., macro base station in FIG.4), a femto cell and pico cell (e.g., femto/pico base station in FIG.4), or the like. In the heterogeneous network, the interference in a PDCCH region in any cell may be increased due to influence from the other cells. For example, when terminals connected with a macro base station are located in the vicinity of a femto cell, especially when the terminals are not allowed to connect with a femto base station, the terminals are greatly interfered with by a femto cell. Additionally, when terminals connected to a pico cell are located in the vicinity of a cell edge of the pico cell (e.g., range expansion region), the terminals are greatly interfered with by a macro cell. Consequently, in the PDCCH region, the reception performance of control information (i.e., DCI) in each terminal is deteriorated.

In the meantime, arranging DCI addressed to terminals under a base station in an R-PDCCH region can minimize the deterioration of the reception performance of control information (i.e., DCI). Specifically, a macro base station performs a transmission process using specific RBs with low transmission power and a femto/pico base station transmits control information to terminals under the femto/pico base station in the R-PDCCH region using the specific RBs, such that the terminals connected with the femto/pico base station (i.e., terminals under femto/pico base station) can receive the control information at a sufficiently low error rate. Based on this interference minimization, the terminals under the femto/pico base station can receive the control information at a low error rate in the R-PDCCH region using RBs that is less interfered with by the macro base station. In the similar way, the macro base station transmits control information in an R-PDCCH region using RBs that are less interfered with by the femto/pico base station (i.e., RBs in which the femto/pico base station processes transmission with low transmission power) and therefore terminals under the macro base station can receive the control information at a low error rate.

However, R-PDCCH is mapped in a data transmitting region (i.e., PDSCH region). Accordingly, the number of RBs used for data transmission (i.e., PDSCH region) decreases and thus data throughput may be reduced, when the number of R-PDCCHs used by each terminal increases as the number of terminals under each base station increases.

It is an object of the claimed invention to provide a base station and a method of transmitting control information that can minimize deterioration of data throughput even when DCI addressed to a terminal connected with a base station is transmitted in an R-PDCCH region.

### Solution to Problem

According to an aspect of the claimed invention, the base station includes: a generation section that generates control information transmitted in a first control channel mapped on a resource region which is the same as a resource region to which data for a terminal is allocated or control information transmitted in a second control channel mapped on a resource region which is different from the resource region; and a transmission section that transmits the generated control information, where the amount of information of the control information in the first control channel is smaller than the amount of information of the control information in the second control channel.

According to an aspect of the claimed invention, the method of transmitting control information includes: generating control information transmitted in a first control channel mapped on a resource region which is the same as a resource region to which data for a terminal is allocated or control information transmitted in a second control channel mapped on a resource region which is different from the resource region; and transmitting the generated control information, where the amount of information of the control information in the first control channel is smaller than the amount of information of the control information in the second control channel.

### Advantageous Effects of Invention

According to the claimed invention, it is possible to minimize deterioration of data throughput even when DCI addressed to a terminal connected with a base station is transmitted in an R-PDCCH region.

### Brief Description of Drawings

FIG.1 shows an example R-PDCCH region;
FIG.2 explains a mapping example of PDCCH;
FIG.3 explains a communication system that includes a radio communication relay apparatus;
FIG.4 explains a heterogeneous network;
FIG.5 is a main block diagram of a base station according to Embodiment 1 of the claimed invention;
FIG.6 is a block diagram showing a configuration of the base station according to Embodiment 1 of the claimed invention;
FIG.7 explains a search space according to Embodiment 1 of the claimed invention;
FIG.8 is a block diagram illustrating a configuration of a terminal according to Embodiment 1 of the claimed invention;
FIG.9 shows a setting process of an allocatable RB region according to Embodiment 1 of the claimed invention (setting method 1);
FIG.10 shows another setting process of the allocatable RB region according to Embodiment 1 of the claimed invention (setting method 2);
FIG,11 is a block diagram showing a configuration of a terminal according to Embodiment 2 of the claimed invention;
FIG.12 shows a setting process of an allocatable RB region according to Embodiment 2 of the claimed invention;
FIG.13 shows another setting process of the allocatable RB region according to Embodiment 2 of the claimed invention; and
FIG.14 shows a setting process of an allocatable MCS according to Embodiment 3 of the claimed invention.

### Description of Embodiment

Hereinafter, embodiments of the claimed invention will be described in detail with reference to the accompanying drawings. In the embodiments, the same components are denoted by the same reference numerals and their overlapping explanations are omitted.

### [Embodiment 1]

### [Summary of System]

A communication system according to the present embodiment includes base station 100 and terminal 200. Base station 100 is an LTE-A base station, and terminal 200 is an LTE-A terminal.

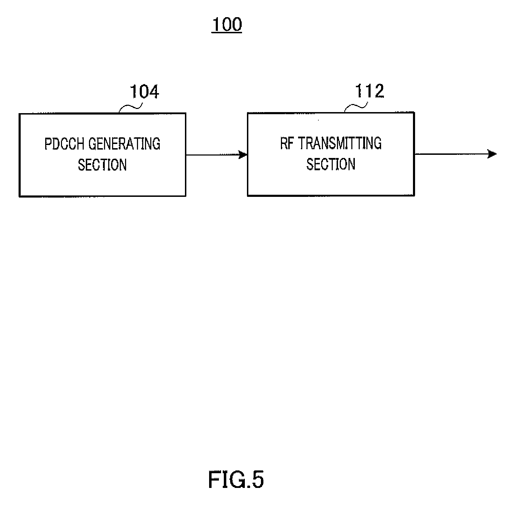

FIG.5 is a main block diagram of base station 100 according to Embodiment 1 of the claimed invention. In base station 100, PDCCH generating section 104 generates control information transmitted in R-PDCCH (i.e., the first control channel) mapped on a resource region which is the same as a resource region (i.e., PDSCH region) to which data for terminal 200 is allocated or control information transmitted in PDCCH (i,e., the second control channel) mapped on a resource region which is different from the above described resource region. RF transmitting section 112 transmits the generated control information. The amount of information on the control information in R-PDCCH (i.e., the first control channel) is smaller than the amount of information on the control information in PDCCH (i.e., the second control channel).

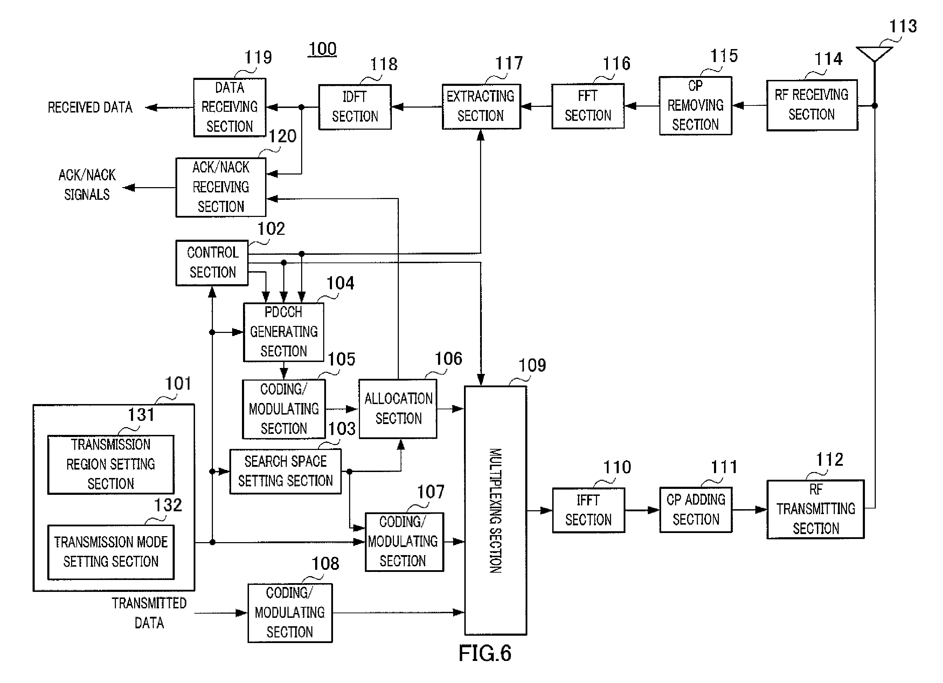

[Configuration of Base Station 100] FIG.6 is a block diagram showing a configuration of base station 100 according to Embodiment 1 of the claimed invention. In FIG.6, base station 100 includes setting section 101, control section 102, search space setting section 103, PDCCH generating section 104, coding/modulating sections 105, 107, and 108, allocation section 106, multiplexing section 109, inverse fast fourier transform (IFFT) section 110, cyclic prefix (CP) adding section 111, RF transmitting section 112, antenna 113, RF receiving section 114, CP removing section 115, fast fourier transform (FFT) section 116, extracting section 117, inverse discrete fourier transform (IDFT) section 118, data receiving section 119, and ACK/NACK receiving section 120.

Setting section 101 sets a resource region used for transmitting DCI for terminal 200 (i.e., transmission region of DCI), and also sets each transmission mode of uplink and downlink of terminal 200. The resource region and the transmission mode are set for each terminal 200 targeted for setting.

Specifically, setting section 101 includes transmission region setting section 131 and transmission mode setting section 132.

Transmission region setting section 131 sets the resource region used for transmitting DCI for terminal 200. Candidates of the resource region to be set include a PDCCH region, an R-PDCCH region in slot 0 and an R-PDCCH region in slot 1. For example, the PDCCH region is set for terminal 200 in normal times, and the R-PDCCH region in slot 0 or the R-PDCCH region in slot 1 are set for terminal 200 when a large number of terminals 200 performing communication under base station 100 may cause a shortage of the PDCCH region or when it is determined that the interference in the PDCCH region is large. In other words, transmission region setting section 131 sets whether to perform blind decoding only on the PDCCH region or on both of the PDCCH region and the R-PDCCH region (or only on the R-PDCCH region), for each terminal 200. Any condition is available for determining whether or not a transmission region of DCI includes the R-PDCCH region in transmission region setting section 131. Transmission region setting section 131 sets an RB region targeted when the blind decoding is performed on the R-PDCCH region.

Transmission mode setting section 132 sets a transmission mode (e.g., spatial multiplexing MIMO transmission, beam forming transmission, non-contiguous band allocation or the like) of each of uplink and downlink of terminal 200, based on the situation of a propagation path or the like of each terminal 200.

Setting section 101 sets an RB region that is allocatable to downlink data for terminal 200 (hereinafter, simply referred to as "allocatable RB region") when PDCCH and R-PDCCH are used for transmitting DCI for each terminal 200. In this case, setting section 101 sets part of a standard setting value candidate group as an RB region to which data can be allocated (i.e., allocation RB candidate group), the region capable of being notified to terminal 200 in R-PDCCH. For example, a setting value candidate group (i.e., allocation RB candidate group) is used as the standard setting value candidate group, the setting value candidate group capable of being notified using downlink control information (DCI) transmitted in PDCCH mapped on a resource region (i.e., PDCCH region) which is different from a resource region (i.e., PDSCH region) to which downlink data is allocated. Details of the method of setting an RB region allocatable for each terminal 200 will be hereinafter described.

Setting section 101 transmits setting information, which is set for each terminal 200, including information indicating the transmission region (a resource region) of DCI, information indicating a transmission mode, and information indicating an allocatable RB region, to control section 102, search space setting section 103, PDCCH generating section 104, and coding/modulating section 107. The information included in the setting information is notified to each terminal 200 through coding/modulating section 107 as control information in the higher layer (hereinafter, referred to as "RRC control information" or "RRC signaling").

Control section 102 generates allocation control information that includes HARQ-related information such as MCS information, resource (RB) allocating information, and new data indicator (NDI) or the like depending on the setting information received from setting section 101. Uplink resource allocating information that indicates an uplink resource to which uplink data of terminal 200 is allocated (e.g., physical uplink shared channel (PUSCH)) or downlink resource allocating information that indicates a downlink resource to which downlink data addressed to terminal 200 is allocated (e.g., physical downlink shared channel (PDSCH)) are generated as the resource allocating information.

In the case of allocation of downlink data for terminal 200, control section 102 selects an RB (i.e., setting value) for terminal 200 from the allocatable RB region (i.e., setting value candidate group) set at setting section 101 and generates downlink resource allocation information. In other words, the downlink resource allocation information indicates which RB in the allocatable RB region is actually used for allocation.

Additionally, control section 102 generates allocation control information depending on a transmission mode of the uplink of terminal 200 (i.e., one of DCIs 0A and 0B) allocation control information depending on a transmission mode of the downlink (i.e., one of DCIs 1, 1B, 1D, 2, and 2A), or allocation control information common to all terminals (i.e., DCI 0/1A) for each terminal 200, based on the setting information received from setting section 101.

For example, in a normal data transmission, control section 102 generates allocation control information depending on the transmission mode of each terminal 200 (i.e., one of DCIs 1, 2, 2A, and 2B) such that data transmission can be performed using the transmission mode set for each terminal 200 in order to improve throughput. Consequently, the data transmission can be performed using the transmission mode set for each terminal 200, and therefore the throughput can be improved.

However, the error in receiving data may frequently occur in a transmission mode set for each terminal 200 due to a rapid change in the propagation path condition or a change in interference from adjacent cells or the like. In this case, control section 102 generates the allocation control information in the format common to all terminals (i.e., DCI 0/1A) and transmits data using a robust default transmission mode. Consequently, further robust data transmission is possible even when propagation environment is rapidly changed.

In addition, control section 102 generates allocation control information common to all terminals (i.e., DCI 0/1A) and transmits the information using the default transmission mode, also in transmitting control information on the higher layer (i.e., RRC signaling) for notifying a change of the transmission mode when the propagation path condition is deteriorated. The number of information bits of DCI 0/1A common to all terminals is smaller than the numbers of information bits of DCIs 1, 1B, 1D, 2, 2A, 0A, and 0B that depend on a transmission mode. For this reason, DCI 0/1A can be used for transmission with a lower coding rate than DCIs 1, 1B, 1D, 2, 2A, 0A, and 0B when the same CCE aggregation level is set. Consequently, control section 102 uses DCI 0/1A when the propagation path condition is deteriorated, and as a result, even terminal 200, of which the propagation path condition is poor, can receive the allocation control information (and data) with a low error rate.

Control section 102 generates allocation control information for a common channel (e.g., DCIs 1C and 1A) for data allocation common to a plurality of terminals, such as broadcast information and paging information, other than the allocation control information for terminal-specific data allocation.

In the generated allocation control information for terminal-specific data allocation, control section 102 outputs: MCS information and NDI to PDCCH generating section 104; uplink resource allocation information to PDCCH generating section 104 and extracting section 117; and downlink resource allocation information to PDCCH generating section 104 and multiplexing section 109. Control section 102 also outputs the generated allocation control information for a common channel to PDCCH generating section 104.

Search space setting section 103 sets a common search space (C-SS) and UE specific search space (UE-SS) based on a transmission region of DCI indicated by the setting information received from setting section 101. As described above, the common search space (C-SS) is common to all terminals, and the UE specific search space (UE-SS) is dedicated to each terminal.

Specifically, search space setting section 103 sets previously set CCEs (e.g., sixteen CCEs from the first CCE) as C-SS. The CCE is a standard unit.

In contrast, search space setting section 103 sets UE-SS for each terminal. For example, search space setting section 103 calculates UE-SS of a certain terminal, from a CCE number calculated from a terminal ID of the terminal and a hash function to perform randomization, and the number of CCEs (L) forming a search space.

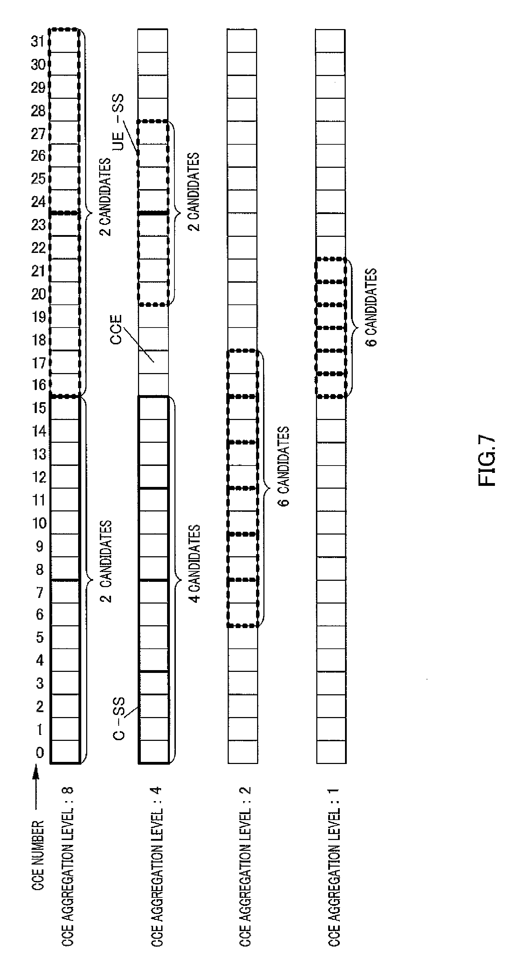

FIG.7 shows example setting of UE-SS for certain terminal 200 and C-SS.

In FIG.7, four DCI allocation region candidates (i.e., CCEs 0 to 3, 4 to 7, 8 to 11, and 12 to 15) are set as C-SS in CCE aggregation level 4 of PDCCH. In addition, two DCI allocation region candidates (i.e., CCEs 0 to 7 and 8 to 15) are set as C-SS in CCE aggregation level 8 of PDCCH. In other words, a total of six DCI allocation region candidates are set as C-SS in FIG.7.

Additionally, six DCI allocation region candidates (i.e., each of CCEs 16 to 21) are set as UE-SS in CCE aggregation level 1 in FIG.7. Six DCI allocation region candidates (i.e., formed by dividing CCEs 6 to 17 in pairs) are set as UE-SS in CCE aggregation level 2. Two DCI allocation region candidates (i.e., CCEs 20 to 23 and 24 to 27) are set as UE-SS in CCE aggregation level 4. Two DCI allocation region candidates (i.e., CCEs 16 to 23 and 24 to 31) are set as UE-SS in CCE aggregation level 8. In other words, a total of sixteen DCI allocation region candidates are set as UE-SS in FIG.7.

Additionally, when both of a PDCCH region and an R-PDCCH region are set as transmission regions of DCI indicated by the setting information received from setting section 101, search space setting section 103 sets the search spaces that include a plurality of DCI allocation region candidates described above (i.e., C-SS and UE-SS) in the PDCCH region and the R-PDCCH region.

Search space setting section 103 outputs the search space information that indicates the set C-SS and the set UE-SS of each terminal, to allocation section 106 and coding/modulating section 107.

PDCCH generating section 104 generates DCI that includes allocation control information for terminal-specific data allocation (i.e., uplink resource allocation information, downlink resource allocation information, MCS information, NDI, or the like for each terminal), or DCI that includes allocation control information for a common channel (i.e., broadcast information common to terminals and paging information or the like), both pieces of allocation control information being received from control section 102. In this case, PDCCH generating section 104 adds CRC bits to the uplink allocation control information and downlink allocation control information generated for each terminal, and furthermore masks (or, scrambles) the CRC bits by a terminal ID. In addition, PDCCH generating section 104 generates DCI, which includes a resource region actually used for downlink data (i.e., RBs selected for each terminal 200), from among an allocatable RB region indicated by the setting information received from setting section 101 (i.e., RB candidates available for downlink data). PDCCH generating section 104 then outputs the masked signals to coding/modulating section 105.

Coding/modulating section 105 performs channel coding and modulation on the DCI received from PDCCH generating section 104, and outputs the modulated signals to allocation section 106. In this case, coding/modulating section 105 sets a coding rate such that each terminal can achieve sufficient received quality, based on channel quality indicator (CQI) information reported from each terminal. For example, coding/modulating section 105 sets a lower coding rate for a terminal located in the vicinity of a cell boundary (i.e., terminal having lower channel quality).

Allocation section 106 allocates DCI that includes allocation control information for a common channel and DCI that includes allocation control information for terminal-specific data allocation for each terminal, to CCE or R-CCE in C-SS or CCE or R-CCE in UE-SS for each terminal, respectively, the CCE or R-CCE indicated by the search space information received from search space setting section 103, both pieces of DCI received from coding/modulating section 105. For example, allocation section 106 selects a single DCI allocation region candidate from a DCI allocation region candidate group in C-SS (e.g., FIG.7). Allocation section 106 allocates DCI that includes allocation control information for a common channel to CCE (or R-CCE) (hereinafter, simply referred to as "CCE" without distinguishing between CCE and R-CCE) in the selected DCI allocation region candidate. As described above, the CCE is a resource unit forming PDCCH, and the R-CCE is a resource unit forming R-PDCCH.

When a DCI format for the terminal targeted for allocation (hereinafter, referred to as "allocation target terminal") depends on a transmission mode (e.g., DCIs 1, 1B, 1D, 2, 2A, 0A, or 0B) allocation section 106 allocates DCI to CCE in UE-SS set for the allocation target terminal. In contrast, when the DCI format for the allocation target terminal is common to all terminals (e.g., DCI 0/1A), allocation section 106 allocates DCI to CCE in UE-SS set for the allocation target terminal or CCE in C-SS.

The CCE aggregation level allocated to a single piece of DCI differs depending on a coding rate and the number of bits of DCI (i.e., information amount of allocation control information). For example, the coding rate of DCI addressed to a terminal located in the vicinity of a cell boundary is set low, and therefore more physical resources are required. Therefore, allocation section 106 allocates DCI addressed to the terminal located in the vicinity of the cell boundary, to more CCEs.

Allocation section 106 outputs information on CCE allocated to DCI, to multiplexing section 109 and ACK/NACK receiving section 120. Allocation section 106 also outputs coded and modulated DCI to multiplexing section 109.

Coding/modulating section 107 performs channel coding and modulation on the setting information received from setting section 101 and the search space information received from search space setting section 103 (i.e., control information on higher layer), and outputs the modulated setting information and search space information to multiplexing section 109.

Coding/modulating section 108 performs channel coding and modulation on the inputted transmitted data (i.e., downlink data), and outputs the modulated transmitted data signals to multiplexing section 109.

Multiplexing section 109 multiplexes the coded and modulated DCI signals received from allocation section 106, the setting information and search space information received from coding/modulating section 107 (i.e., control information on higher layer), and the data signals received from coding/modulating section 108 (i.e., PDSCH signals), in the time domain and the frequency domain. Multiplexing section 109 also maps data signals (i.e., PDSCH signals) and PDCCH signals based on the downlink resource allocation information received from control section 102. Multiplexing section 109 may also map the setting information to the PDSCH. Multiplexing section 109 then outputs the multiplexed signals to IFFT section 110.

IFFT section 110 converts the multiplexed signals of each antenna, which are received from multiplexing section 109, into a time waveform, and CP adding section 111 acquires OFDM signals by adding a CP to this time waveform.

RF transmitting section 112 performs a transmission radio process (i.e., up-conversion and a digital-to-analog (D/A) conversion, for example) on the OFDM signals inputted from CP adding section 111 and transmits the result through antenna 113.

RF receiving section 114 applies a reception radio process (i.e., down-conversion, analog-to-digital (A/D) conversion or the like) to reception radio signals received in a receiving band through antenna 113, and outputs the resulting received signals to CP removing section 115.

CP removing section 115 removes the CP from the received signals, and fast fourier transform (FFT) section 116 converts the received signals from which the CP is removed into frequency domain signals.

Extracting section 117 extracts uplink data from the frequency domain signals received from FFT section 116 based on the uplink resource allocation information received from control section 102, and IDFT section 118 converts the extracted signals into time domain signals and outputs the time domain signals to data receiving section 119 and ACK/NACK receiving section 120.

Data receiving section 119 decodes the time domain signals inputted from IDFT section 118. Data receiving section 119 then outputs the decoded uplink data as received data.

ACK/NACK receiving section 120 extracts ACK/NACK signals from each terminal to downlink data (i.e., PDSCH signals) among the time region signals received from IDFT section 118. Specifically, ACK/NACK receiving section 120 extracts the ACK/NACK signals from uplink control channel (e,g., physical uplink control channel (PUCCH)) based on the information received from allocation section 106. The uplink control channel is associated with CCE used for transmitting downlink allocation control information associated with the downlink data.

ACK/NACK receiving section 120 performs ACK/NACK decision on the extracted ACK/NACK signals.

In this case, CCE is associated with PUCCH in order to eliminate the need for signaling designed for notifying PUCCH from a base station to each terminal, the PUCCH used by each terminal for transmitting the ACK/NACK signals. Accordingly, downlink communication resource can be effectively used. Accordingly to this association, each terminal determines PUCCH used for transmitting ACK/NACK signals, based on the CCE, on which the downlink allocation control information (i.e., DCI) addressed to the terminal is mapped.

### [Configuration of Terminal 200]

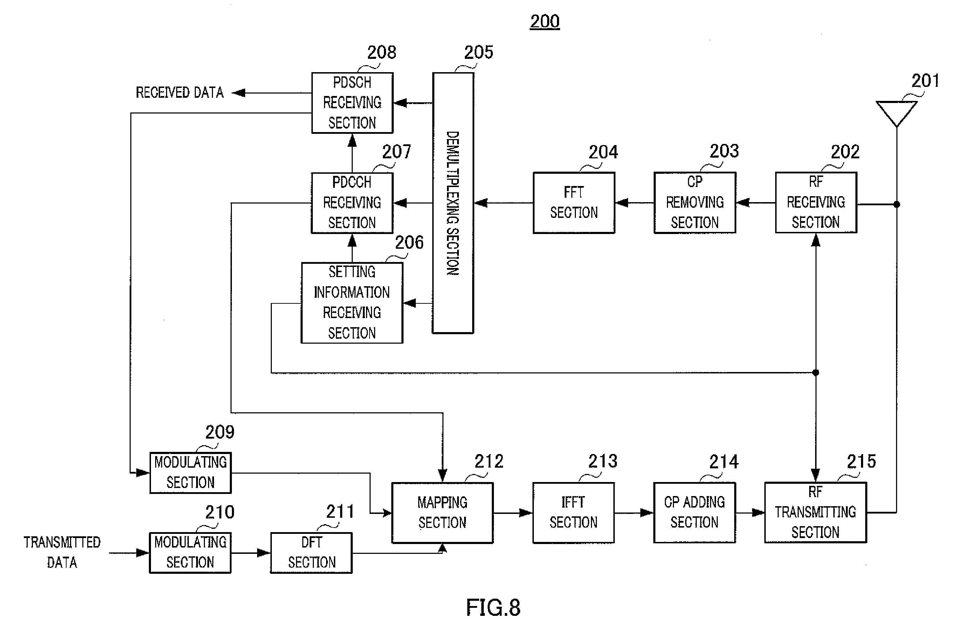

FIG.8 is a block diagram showing a configuration of terminal 200 according to Embodiment 1 of the claimed invention. Terminal 200 is an LTE-A terminal, receives data signals (i.e., downlink data), and transmits ACK/NACK signals corresponding to the data signals to base station 100 using uplink control channel (i.e., PUCCH).

In FIG.8, terminal 200 includes antenna 201, RF receiving section 202, CP removing section 203, FFT section 204, demultiplexing section 205, setting information receiving section 206, PDCCH receiving section 207, PDSCH receiving section 208, modulating sections 209 and 210, DFT section 211, mapping section 212, IFFT section 213, CP adding section 214, and RF transmitting section 215.

RF receiving section 202 sets a receiving band based on the band information received from setting information receiving section 206. RF receiving section 202 applies a reception radio process (i.e., down-conversion, analog-to-digital (A/D) conversion, or the like) to radio signals received in the receiving band through antenna 201 (i.e., OFDM signals in this embodiment), and outputs the resulting received signals to CP removing section 203. The received signals may include PDSCH signals, DCI (allocation control information), and control information in the higher layer including setting information, search space information, and allocatable RB information. DCI is allocated to a common search space (C-SS) set to terminal 200 and another terminal, or a UE specific search space (UE-SS) set to terminal 200.

CP removing section 203 removes a CP from the received signals, and FFT section 204 converts the received signals from which the CP is removed into frequency domain signals. The frequency domain signals are outputted to demultiplexing section 205.

Demultiplexing section 205 outputs a component, which may include DCI, (i.e., signals extracted from a PDCCH region and an R-PDCCH region) among the signals received from FFT section 204, to PDCCH receiving section 207. Demultiplexing section 205 also outputs control signals in the higher layer (e.g., RRC signaling, for example) including the setting information, the search space information and the allocatable RB information, to setting information receiving section 206 and outputs data signals (i.e., PDSCH signals) to PDSCH receiving section 208. Demultiplexing section 205 extracts the setting information from signals received at PDSCH receiving section 208 when the control signals in the higher layer including the setting information, the search space information and the allocatable RB information are transmitted through PDSCH.

Setting information receiving section 206 reads information indicating a terminal ID set to the terminal, band information indicating a resource region set to the terminal, search space information set to the terminal, and information indicating the transmission mode set to the terminal, from the control signals in the higher layer received from demultiplexing section 205.

The band information set to the terminal is outputted to PDCCH receiving section 207, RF receiving section 202, and RF transmitting section 215. The information indicating the terminal ID set to the terminal is outputted to PDCCH receiving section 207 as terminal ID information. The search space information set to the terminal is outputted to PDCCH receiving section 207 as search space region information. The information indicating a transmission mode set to the terminal is outputted to PDCCH receiving section 207 as transmission mode information. The information on allocatable RBs is outputted to PDCCH receiving section 207 as the allocatable RB information.

PDCCH receiving section 207 acquires DCI addressed to the terminal, through blind decoding (i.e., monitoring) on signals inputted from demultiplexing section 205. PDCCH receiving section 207 performs the blind decoding on each of a DCI format for data allocation common to all terminals (e.g., DCI 0/1A), a DCI format depending on a transmission mode set to the terminal (e.g., DCIs 1, 1B, 1D, 2, 2A, 0A and 0B), and a DCI format for a common channel allocation common to all terminals (e.g., DCIs 1C and 1A). Consequently, the DCI that includes allocation control information of each DCI format can be acquired.

Specifically, PDCCH receiving section 207 performs the blind decoding on the DCI formats for a common channel allocation (i.e., DCI 1C and 1A) and the DCI format for data allocation common to all terminals (i.e., DCI 0/1A) in C-SS indicated in the search space region information received from setting information receiving section 206. In other words, PDCCH receiving section 207 demodulates and decodes each decoding region candidate in C-SS (i.e., candidate in a CCE region allocated to terminal 200) with respect to the size of the DCI format for a common channel allocation and the size of the DCI format for data allocation common to all terminals. PDCCH receiving section 207 demasks CRC bits of the decoded signals by an ID common to a plurality of terminals. PDCCH receiving section 207 determines that signals, which represent CRC=OK (i.e., no error) as the result of demasking, are the DCI including allocation control information for a common channel. Alternatively, PDCCH receiving section 207 demasks the CRC bits by the terminal ID of the terminal indicated by terminal ID information, with respect to the decoded signals. PDCCH receiving section 207 determines that signals, which represent CRC=OK (i.e., no error) as the result of demasking, are the DCI including allocation control information for the terminal. In other words, in C-SS, PDCCH receiving section 207 distinguishes whether the allocation control information of DCI 0/1A is for the common channel or for data allocation addressed to the terminal, by a terminal ID (i.e., ID common to a plurality of terminals, or terminal ID of terminal 200).

In addition, PDCCH receiving section 207 calculates each UE-SS of the terminal for each CCE aggregation level, using the terminal ID of the terminal indicated by the terminal ID information received from setting information receiving section 206. PDCCH receiving section 207 demodulates and decodes each blind decoding region candidate in the calculated UE-SS (i.e., CCE region candidates of each CCE aggregation level) with respect to the size of the DCI format associated with a transmission mode set to the terminal (i.e., transmission mode indicated in the transmission mode information) and the size of the DCI format common to all terminals (i.e., DCI 0/1A. PDCCH receiving section 207 demasks CRC bits by a terminal ID of the terminal, with respect to the decoded signals. PDCCH receiving section 207 determines that signals, which represent CRC=OK (i.e., no error) as the result of demasking, are the DCI addressed to the terminal.

PDCCH receiving section 207 performs the blind decoding (i.e., monitoring) on search spaces set in an R-PDCCH region and acquires the DCI that is addressed to the terminal and is transmitted in R-PDCCH, as with the above described PDCCH region, also when the search space region information received from setting information receiving section 206 includes the R-PDCCH region as a search space region. In this case, a DCI format targeted when PDCCH receiving section 207 performs blind decoding on the search space set in the R-PDCCH region is set as, for example, a DCI format using RB allocation information in which an allocatable RB region is limited, i.e., a DCI size with a smaller number of bits compared to the PDCCH region.

Alternatively, when any search space region information (i.e., distribution of search space) is not inputted from setting information receiving section 206 (when base station 100 dose not transmit any search space information), terminal 200 may perform blind decoding in transmission regions of a plurality of pieces of DCI in which DCI addressed to terminal 200 may be allocated, without regard to the distribution of search space.

PDCCH receiving section 207 outputs: downlink resource allocation information included in the DCI addressed to the terminal to PDSCH receiving section 208, when receiving downlink allocation control information; and uplink resource allocation information to mapping section 212 when receiving uplink allocation control information. PDCCH receiving section 207 outputs a CCE number of CCE (i.e., CCE number of the first CCE when the number of connected CCEs is more than one) used for transmitting DCI addressed to the terminal (i.e., CCE used for transmitting signals representing CRC=OK) to mapping section 212. Details of a blind decoding (i.e., monitoring) process in PDCCH receiving section 207 will be hereinafter described.

PDSCH receiving section 208 extracts received data (i.e., downlink data) from the PDSCH signals received from demultiplexing section 205, based on the downlink resource allocation information received from PDCCH receiving section 207. In other words, PDSCH receiving section 208 receives downlink data (i.e., downlink data signals) based on the downlink resource allocation information (i.e., allocation control information) that is addressed to terminal 200 and is allocated to one of a plurality of DCI allocation region candidates (i.e., blind decoding region candidates). PDSCH receiving section 208 performs error detection on the extracted received data (i.e., downlink data). As the result of the error detection, PDSCH receiving section 208 generates NACK signals as ACK/NACK signals when an error is found in the received data, and generates ACK signals as ACK/NACK signals when no error is found in the received data. The ACK/NACK signals are outputted to modulating section 209.

Modulating section 209 modulates the ACK/NACK signals received from PDSCH receiving section 208 and outputs the modulated ACK/NACK signals to mapping section 212.

Modulating section 210 modulates transmitted data (i.e., uplink data) and outputs the modulated data signals to DFT section 211.

DFT section 211 converts the data signals received from modulating section 210 into frequency domain signals and outputs the resulting plurality of frequency components to mapping section 212.

Mapping section 212 maps, on PUSCH, the plurality of frequency components received from DFT section 211, in accordance with the uplink resource allocation information received from PDCCH receiving section 207. Mapping section 212 specifies PUCCH in accordance with the CCE number received from PDCCH receiving section 207. Mapping section 212 maps the ACK/NACK signals inputted from modulating section 209 on the specified PUCCH described above.

IFFT section 214 converts a plurality of frequency components mapped on the PUSCH into a time-domain waveform, and CP adding section 214 adds a CP to the time-domain waveform.

RF transmitting section 215 is formed to be able to change a transmission band. RF transmitting section 215 sets the transmission band based on the band information received from setting information receiving section 206. Then, RF transmitting section 215 applies a transmission radio process (i.e., up-conversion, digital-to-analog (D/A) conversion, or the like) to signals to which a CP is added, and transmits the result through antenna 201.

### [Operations of Base Station 100 and Terminal 200]

In base station 100, setting section 101 sets part of a setting value candidate group of a transmission parameter that can be notified to each terminal 200 using DCI transmitted in PDCCH (hereinafter, referred to as "standard setting value candidate group" since the setting value candidate group functions as the standard of the setting value set associated with R-PDCCH), as a setting value candidate group (i.e., group of settable setting value) of a transmission parameter that can be notified to each terminal 200 using DCI transmitted in R-PDCCH.

In the present embodiment, the above described transmission parameter (i.e., setting value) is set as an RB to which downlink data for terminal 200 is allocated. Accordingly, setting section 101 sets some of the plurality of RBs (i.e., all RBs in a system band in this embodiment) forming an allocatable RB region that can be notified to each terminal 200 using DCI transmitted in PDCCH (i.e., setting value candidate group of RB, standard setting value candidate group for R-PDCCH) as an allocatable RB region that can be notified to each terminal 200 using DCI transmitted in R-PDCCH (i.e., setting value candidate group).

In other words, setting section 101 sets the number of allocation RB candidates that can be notified using DCI transmitted in R-PDCCH smaller than the number of allocation RB candidates that can be notified using DCI transmitted in PDCCH. The range of allocatable RBs in R-PDCCH is thus narrower than the range of allocatable RBs in PDCCH.

Control section 102 selects an RB for terminal 200 from the allocatable RB region set at setting section 101 (i.e., setting value candidate group). PDCCH generating section 104 generates DCI including the RB (i.e., setting value) actually selected by control section 102 for terminal 200, in the allocatable RB region set at setting section 101. Accordingly, the DCI is transmitted to terminal 200 using a PDCCH region or an R-PDCCH region.

In terminal 200, PDCCH receiving section 207 performs blind decoding (i.e., monitoring) on each search space set in a PDCCH region and an R-PDCCH region, and acquires DCI that is addressed to the terminal 200 and is transmitted in PDCCH or R-PDCCH. When the search space region information received from setting information receiving section 206 indicates the R-PDCCH region, PDCCH receiving section 207 defines a DCI format having the DCI size, of which the number of bits is smaller than that of a PDCCH region, as the target of blind decoding.

Hereinafter, methods 1 and 2 of setting an allocatable RB region in setting section 101 will be described.

### <Setting Method 1>

As described above, in a heterogeneous network, interference control may be performed between a macro cell and a pico/femto cell in an R-PDCCH region. In a terminal to which DCI is transmitted in R-PDCCH, the interference control is also performed on data signals (i.e., PDSCH region, that is, an RB region other than R-PDCCH region).

Specifically, controlling an increase and decrease in transmission power (i.e., ON/OFF of transmission) of specific RBs in each cell having a different cell type (i.e., macro cell and pico/femto cell) reduces mutual interference (i.e., inter-cell interference).

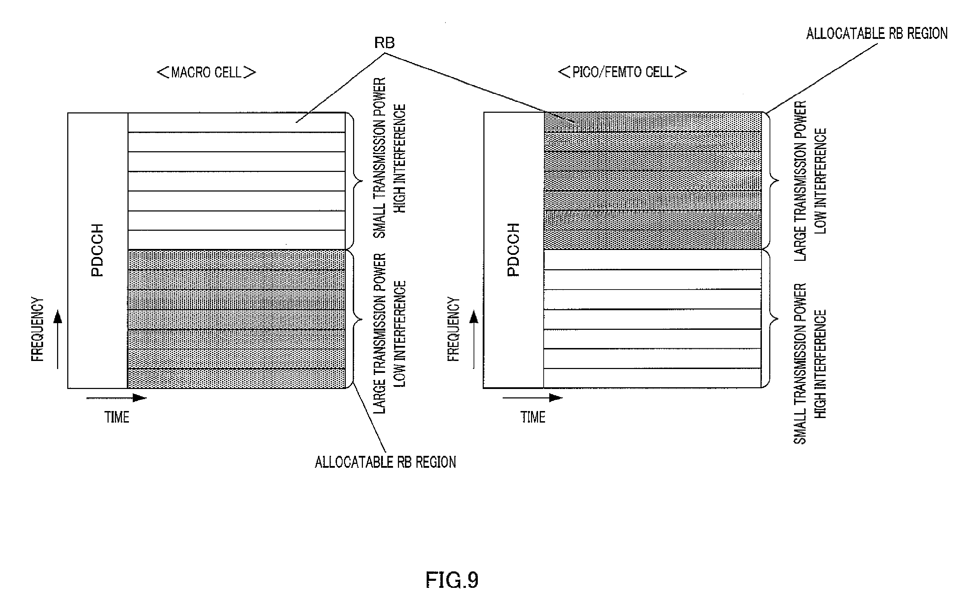

For example, as shown in FIG.9, in an RB region at the side of lower frequency (7 RBs) in 14 RBs of a system band, transmission power is increased in a macro cell (i.e., transmission power: large) and decreased in a pico/femto cell (i.e., transmission power: small). In contrast, as shown in FIG.9, in an RB region at the side of higher frequency (7 RBs) in 14 RBs of the system band, the transmission power is decreased in the macro cell (i.e., transmission power: small) and is increased in the pico/femto cell (i.e., transmission power: large).

Consequently, in the RB region at the side of lower frequency (7 RBs) shown in FIG.9, decreasing the transmission power in the pico/femto cell decreases the inter-cell interference in the macro cell (i.e., interference from the pico/femto cell) (i.e., interference: low). Similarly, in the RB region at the side of higher frequency (7 RBs) shown in FIG.9, decreasing the transmission power in the macro cell decreases the inter-cell interference in the pico/femto cell (i.e., interference from the macro cell) (i.e., interference: low).

Accordingly, in the present setting method, setting section 101 sets, among a plurality of RBs (i.e., all RBs in a system band) forming an allocatable RB region that can be notified to each terminal 200 using DCI transmitted in PDCCH (i.e., standard setting value candidate group), some RBs that are less interfered with by a base station (i.e., the other cell type) other than base station 100, as an allocatable RB region that can be notified to each terminal 200 using DCI transmitted in R-PDCCH (i.e., setting value candidate group for RBs). In other words, among a plurality of allocatable RBs in PDCCH, some RBs that are less interfered with by a base station other than base station 100 are set as allocatable RBs in R-PDCCH.

In this case, base station 100 according to the present embodiment is provided in each of a macro cell and a pico/femto cell.

Specifically, as shown in FIG.9, setting section 101 of base station 100 provided in the macro cell sets an RB region less interfered with by the pico/femto cell (i.e., interference: low), i.e., RB region at the side of lower frequency (7 RBs), as an allocatable RB region that can be notified to terminal 200 using DCI transmitted in R-PDCCH. Similarly, as shown in FIG.9, setting section 101 of base station 100 provided in the pico/femto cell sets an RB region less interfered with by the macro cell (i.e., interference: low), i.e., RB region at the side of higher frequency (7 RBs), as an allocatable RB region that can be notified to terminal 200 using DCI transmitted in R-PDCCH.

In other words, the macro cell and the pico/femto cell set an RB region in which transmission power of the cells is large (transmission power: large) (i.e., RB region having high interference robustness) as an allocatable RB region that can be notified to terminal 200 using DCI transmitted in R-PDCCH.

In addition, the macro cell and the pico/femto cell set all 14 RBs in a system band, as an allocatable RB region that can be notified to terminal 200 using DCI transmitted in PDCCH.

In other words, each setting section 101 of the macro cell and the pico/femto cell sets the number of RB candidates that can be notified to terminal 200 using DCI transmitted in R-PDCCH (i.e., 7 RBs) smaller than the number of RB candidates that can be notified to terminal 200 using DCI transmitted in PDCCH (i.e., 14 RBs). Specifically, setting section 101 sets some RBs among a plurality of RBs (i.e., RB region in system band) that can be notified using DCI transmitted in PDCCH, as RB candidates that can be notified using DCI transmitted in R-PDCCH. When DCI is transmitted in R-PDCCH to terminal 200, setting section 101 thus limits the target of RB allocation of downlink data only to some of the RB regions (i.e., RB regions in the system band) used when DCI is transmitted in PDCCH.

Accordingly, the number of bits indicating the result of resource allocation of when DCI is transmitted in R-PDCCH is smaller than that of when DCI is transmitted in PDCCH, and therefore the number of DCI bits (i.e., DCI size) is decreased. In other words, in base station 100, the DCI size of DCI transmitted in R-PDCCH is smaller than the DCI size of DCI transmitted in PDCCH.

As described above, decreasing the number of bits indicating the result of resource allocation of downlink data for terminal 200 can decrease the total number of RBs used as an R-PDCCH region, the number of bits included in the DCI transmitted in R-PDCCH. In other words, the deterioration of system throughput can be minimized since decreasing the number of DCI bits can reduce a resource region (i.e., total number of RBs) used, in a PDSCH region, as the R-PDCCH region and limit the reduction of a resource region (i.e., PDSCH region) available for downlink data.

In this embodiment, as shown in FIG.9, an allocatable RB region for a terminal to which DCI needs to be transmitted in R-PDCCH is smaller than that for a terminal to which DCI needs to be transmitted in PDCCH, and therefore the flexibility of RB allocation is reduced. However, the terminal to which DCI needs to be transmitted in R-PDCCH, i.e., a terminal in which inter-cell interference needs to be reduced by interference control, is likely to be located in the vicinity of the cell boundary. Accordingly, there is a high possibility that an RB with low interference are allocated to the terminal to which DCI needs to be transmitted in R-PDCCH, when resource allocation is performed by, for example, a proportional fair (PF) scheduler or the like. For example, in a macro cell shown in FIG.9, there is a high possibility that one of an RB region that is less interfered with by a pico/femto cell (i.e., RB region at the side of lower frequency (7 RBs)) is allocated for transmitting downlink data to the terminal located in the vicinity of the cell boundary.

Consequently, the reduction of the flexibility of RB allocation has a little impact on throughput in the terminal to which DCI is transmitted in R-PDCCH even when an RB region that can be allocated by DCI transmitted in R-PDCCH is limited by interference control only to an RB region that is less interfered with by a base station of the other cell type, as shown in FIG.9.

As described above, base station 100 sets the number of RB candidates that can be notified to terminal 200 using DCI transmitted in R-PDCCH smaller than the number of RB candidates that can be notified to terminal 200 using DCI transmitted in PDCCH. In addition, base station 100 sets an RB region, which is less interfered with by a base station of the other cell type, as an allocatable RB region for downlink data addressed to terminal 200 to which DCI is transmitted in R-PDCCH. This can minimize the deterioration of system throughput without reducing the throughput in the terminal to which DCI is transmitted in R-PDCCH.

Consequently, according to the present setting method, it is possible to minimize the deterioration of data throughput even when DCI for a terminal connected with a base station is transmitted in an R-PDCCH region.

### <Setting Method 2>

In the present setting method, setting section 101 sets RBs forming a search space set in R-PDCCH, as an allocatable RB region that can be notified using DCI transmitted in R-PDCCH (i.e., setting value candidate group for RBs).

As described above, R-PDCCH is mapped on a resource region having a range that has a width of 1 RB in a frequency domain. A search space for R-PDCCH (i.e., DCI allocation region candidates or blind decoding region candidates) is therefore set on an RB unit basis.

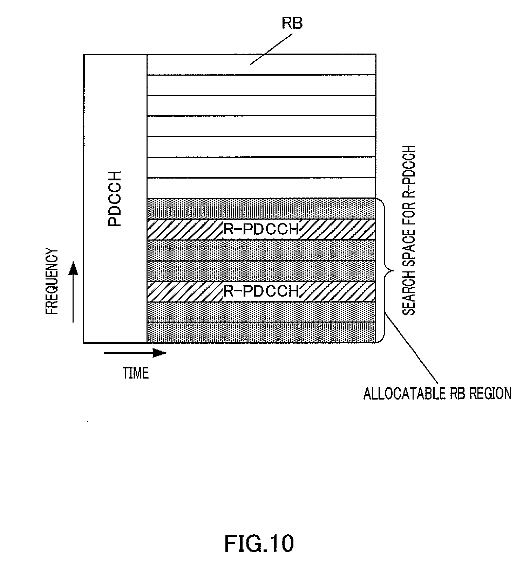

For example, as shown in FIG.10, setting section 101 sets 7 RBs at the side of lower frequency among 14 RBs in a system band, as a search space for R-PDCCH.

Setting section 101 sets, among a plurality of RBs (i.e., all RBs in the system band) forming an allocatable RB region that can be notified to terminal 200 using DCI transmitted in PDCCH (i.e., standard setting value candidate group), some RBs that form a search space for R-PDCCH (i.e., 7 RBs at the side of lower frequency), as an allocatable RB region that can be notified to terminal 200 using DCI transmitted in R-PDCCH (i.e., allocatable RB candidates in a setting value candidate group. for RBs). In other words, among a plurality of allocatable RBs in PDCCH, some RBs that form the search space set in R-PDCCH are set as allocatable RBs in R-PDCCH.

In addition, as with setting method 1, setting section 101 sets all 14 RBs in the system band as the allocatable RB region that can be notified to terminal 200 using DCI transmitted in PDCCH.

In other words, as with setting method 1, setting section 101 sets the number of RB candidates that can be notified to terminal 200 using DCI transmitted in R-PDCCH (i.e., 7 RBs) smaller than the number of RB candidates that can be notified to terminal 200 using DCI transmitted in PDCCH (i.e., 14 RBs).

Consequently, as with setting method 1, decreasing the number of bits indicating the result of resource allocation of downlink data for terminal 200 can reduce, in a PDSCH region, a resource region (i.e., the total number of RBs) used as an R-PDCCH region, the number of bits included in DCI transmitted in R-PDCCH. As described above, the deterioration of system throughput can be minimized since decreasing the number of DCI bits can limit a decrease in the resource region (i.e., PDSCH region) available for downlink data.

As described above, among cells having mutually different cell types, one cell sets low transmission power for specific RBs so as to receive DCI at a sufficiently low error rate, the specific RBs forming an R-PDCCH region set in the other cell. In other words, in each cell, interference from another cell is low in RBs forming a search space for R-PDCCH.

In other words, as with setting method 1, setting section 101 sets an RB region less interfered with by a base station of the other cell type, as an allocatable RB region that can be notified using DCI transmitted in R-PDCCH.

Consequently, the reduction of the flexibility of RB allocation has a little impact on throughput in the terminal to which DCI is transmitted in R-PDCCH even when an RB region that can be allocated by DCI transmitted in R-PDCCH is limited only to an RB region forming the search space for R-PDCCH (i.e., RB region that is less interfered with by a base station of the other cell type due to interference control) as shown in FIG.10.

As with setting method 1, according to the present setting method, it is possible to minimize the deterioration of system throughput without reducing the throughput in a terminal to which DCI is transmitted in R-PDCCH, even when DCI for a terminal connected with a base station is transmitted in an R-PDCCH region.

Alternatively, the same effect as the present setting method can be acquired by defining, instead of a search space for R-PDCCH, an RB region on which a terminal performs blind decoding on R-PDCCH, as an RB candidate that can be notified in R-PDCCH.

Methods 1 and 2 of setting an allocatable RB region in setting section 101 has been described above.

According to the present embodiment described above, in base station 100, setting section 101 sets part of a standard setting value candidate group for RBs (i.e., allocatable RB region that can be notified to terminal 200 using DCI transmitted in R-PDCCH in this embodiment), as an allocatable RB region (i.e., setting value candidate group for PBs) that can be notified to terminal 200 using DCI transmitted in R-PDCCH mapped on the same resource region as a PDSCH region to which downlink data for terminal 200 is allocated. Control section 102 selects RBs for terminal 200 (i.e., setting value) from the above described setting value candidate group set at setting section 101. PDCCH generating section 104 generates DCI including RBs (i.e., setting value) selected for terminal 200.

In this case, the range of RBs (i.e., setting value) settable in R-PDCCH differs from the range of RBs settable in PDCCH. Specifically, the range of setting values settable in R-PDCCH is limited more severely than the range of setting values settable in PDCCH. For example, the range of setting values settable in R-PDCCH is part of the range of setting values settable in PDCCH. In other words, in control information (i.e., DCI) generated at PDCCH generating section 104, the amount of information on the control information in R-PDCCH is smaller than the amount of information on the control information in PDCCH.

Accordingly, the number of RBs necessary for receiving DCI at a sufficiently low error rate can be reduced in an R-PDCCH region, and therefore the deterioration of system throughput can be minimized even when DCI for terminal 200 connected with base station 100 is transmitted in the R-PDCCH region.

In base station 100, setting section 101 sets, among allocatable RB regions that can be notified to terminal 200 using DCI transmitted in PDCCH (i.e., standard setting value candidate group), some RBs that are less interfered with by a base station (i.e., the other cell type) other than base station 100, as an allocatable RB region that can be notified to terminal 200 using DCI transmitted in R-PDCCH.

This enables the impact on throughput to be minimized in a terminal to which DCI is transmitted in R-PDCCH, the impact caused by limiting an allocatable RB region and thus reducing the flexibility of RB allocation.

In the present embodiment, information on an allocatable RB region that can be notified to a terminal using DCI transmitted in R-PDCCH may be individually notified to each terminal using RRC signaling, or may be notified as broadcast information using broadcast channel (BCH). In the case of setting method 2, new notifying information is unnecessary and the amount of control information can be reduced since a terminal can specify the allocatable RB region that can be notified using information indicating a search space in R-PDCCH.

Alternatively, band allocation set in terminal 200 may be used as the above described setting value (i.e., transmission parameter). For example, the band allocation that can be set to terminal 200 includes contiguous band allocation and non-contiguous band allocation. For example, setting section 101 of base station 100 may further limit band allocation (i.e., transmission parameter or setting value) that can be set to terminal 200 to which DCI is transmitted in R-PDCCH, to contiguous band allocation for allocating RBs with continuous numbers (in other words, transmission mode for performing contiguous band allocation transmission). In the case of the contiguous band allocation, for example, information indicating the first RB and a transmission bandwidth of the allocation band is notified. Accordingly, in the case of the contiguous band allocation, allocation control information for notifying the result of resource allocation can be represented with a fewer number of bits than the case of non-contiguous band allocation. The contiguous band allocation thus can make the DCI size including the result of resource allocation smaller than the non-contiguous band allocation. Consequently, limiting the band allocation, which can be set to terminal 200 using DCI transmitted in R-PDCCH, to the contiguous band allocation can decrease the number of DCI bits indicating the result of resource allocation and further reduce the resource region used as an R-PDCCH region. In other words, the deterioration of system throughput can be further minimized since decreasing the size of DCI (i.e., the number of DCI bits) transmitted in R-PDCCH can limit the reduction of a resource region available for downlink data. In addition, the frequency scheduling effect is made smaller by, for example, limiting an allocatable RB region that can be notified to terminal 200 using DCI transmitted in R-PDCCH as shown in FIGs.9 and 10. Consequently, the deterioration of throughput is less impacted even when the band allocation that can be set to terminal 200 using DCI transmitted in R-PDCCH is limited to the contiguous band allocation.

Alternatively, in the present embodiment, the band allocation that can be set to terminal 200 to which DCI is transmitted in R-PDCCH may be limited to distributed allocation. In the distributed allocation, virtual RBs with continuous numbers, are allocated and the virtual RBs are allocated to respective distributed physical resources (i.e., RBs). In other words, the distributed allocation can be considered as a method of allocating virtual RBs with continuous numbers. Accordingly, in the distributed allocation, the amount of notifying information is smaller than in the non-contiguous band allocation as described above. This can further minimize the size of DCI transmitted in R-PDCCH (i.e., the number of DCI bits). In this case, the frequency scheduling effect is also made smaller since an allocatable RB region that can be notified to terminal 200 using DCI transmitted in R-PDCCH is limited as described above. Consequently, the deterioration of throughput is less impacted even when the band allocation that can be set to terminal 200 using DCI transmitted in R-PDCCH is limited to the distributed allocation.

The same effect can be acquired by limiting a transmission mode that can be set to terminal 200 using DCI transmitted in R-PDCCH to a transmission mode that only supports contiguous band allocation (or contiguous RB number allocation). For example, DCI formats 1A, 1B, and 1D for downlink allocation support only the contiguous band allocation (or the contiguous RB number allocation). Accordingly, the transmission mode that can be set to terminal 200 using DCI transmitted in R-PDCCH may be limited to a beam forming transmission mode and a multiuser MIMO transmission mode in which these DCI formats are to be monitored.

### [Embodiment 2]

In the present embodiment, in a heterogeneous network composed of a macro cell and a pico/femto cell, each cell (i.e., base station) measures received quality of the other cells (hereinafter, referred to as "the other cells quality measurement"), Specifically, a base station sets an RB region used for the other cells quality measurement, and a terminal under the base station performs the other cells quality measurement in the set RB region. For example, the terminal performs the other cells quality measurement using pilot signals from another cell, the signals received at the set RB region.

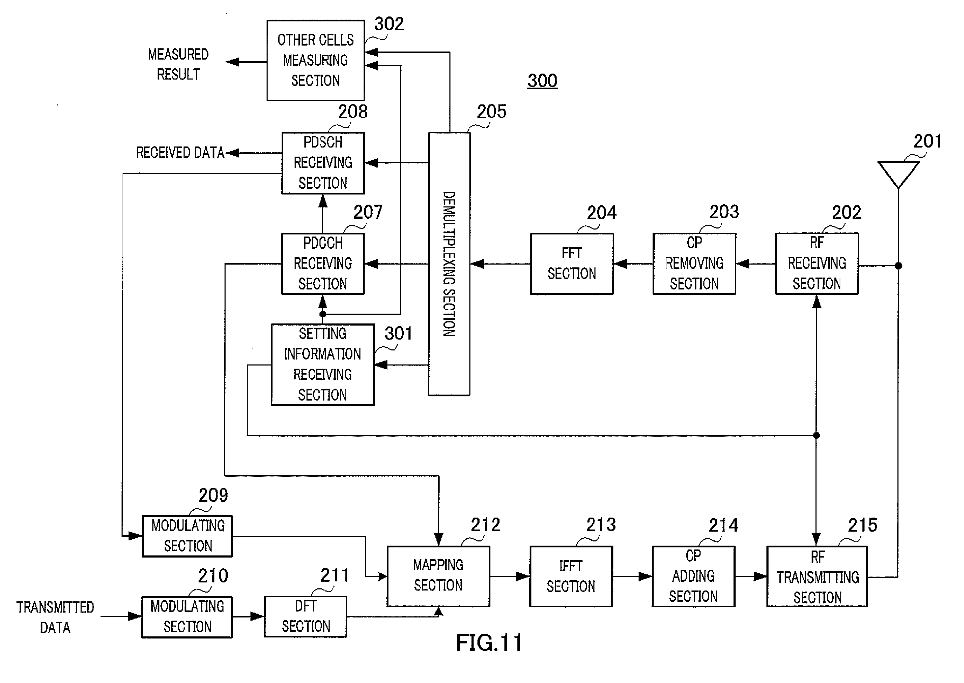

The basic configuration of a base station according to the present embodiment is common to Embodiment 1, and will therefore be described with reference to FIG.6. FIG.11 is a block diagram showing a configuration of a terminal according to the present embodiment. In terminal 300 shown in FIG.11, the same components as with Embodiment 1 (i.e., FIG.8) are denoted by the same reference numerals and their overlapping explanations are omitted.

In base station 100 of the present embodiment, setting section 101 sets an RB region used for the other cells quality measurement, in addition to the operation of Embodiment 1. A terminal connected with each cell performs the other cells quality measurement for handover or the like in an RB region in which another cell does not reduce transmission power, i.e., an RB region in which interference to the cell, with which the terminal currently connected, is high. In other words, setting section 101 sets an RB region in which another cell (the other cell type) does not decrease (i.e., does not mute) the transmission power, as the RB region used for the other cells quality measurement. In other words, setting section 101 does not set an RB region in which another cell decreases (i.e., mutes) transmission power, as a target for the other cells quality measurement. Thereby, each cell can precisely measure reception power of signals from another cell and, for example, adequately select a cell that is a handover destination. In this case, information on an RB region in which another cell (i.e., the other cell type) does not decrease (i.e., does not mute) transmission power is reported from another cell or a control station (not shown) through X2 interface or the like. Setting section 101 notifies, to each terminal 300, the RB region set as the target of the other cells quality measurement as information on RB region for the other cells quality measurement (hereinafter, referred to as "the other cells quality measurement RB region information") using RRC signaling or BCH.

In addition, setting section 101 sets an allocatable RB region for downlink data of when using PDCCH or R-PDCCH for transmitting DCI for each terminal 300, as with Embodiment 1. Specifically, setting section 101 sets, in a system band, an RB region other than an RB region set as the target of the other cells quality measuring (i.e., target for measuring received quality for signals from a base station other than base station 100), as an allocatable RB region that can be notified to terminal 300 using DCI transmitted in R-PDCCH (i.e., setting value candidate group for RBs). In other words, among a plurality of allocatable RBs in PDCCH, some RBs other than RBs subject to received quality measurement for signals from a base station other than base station 100 are set as allocatable RBs in R-PDCCH.

Meanwhile, in terminal 300 in the present embodiment, setting information receiving section 301 reads the other cells quality measurement RB region information notified from base station 100, in addition to setting information as with Embodiment 1. Setting information receiving section 301 outputs the other cells quality measurement RB region information to other cells measuring section 302, and outputs information indicating an RB region other than the other cells quality measurement RB region indicated by the other cells quality measurement RB region information, to PDCCH receiving section 207 as allocatable RB region information.

Other cells measuring section 302 performs the other cells quality measurement (i,e., received quality measurement of signals from another cell) with predetermined timing or timing separately indicated by base station 100. Specifically, other cells measuring section 302 reads reference signals (RS) (or pilot signals) of another cell among signals inputted from demultiplexing section 205, the reference signals allocated in an RB region indicated in the other cells quality measurement RB region information received from setting information receiving section 301. Other cells measuring section 302 measures received quality represented by reception power of read RS, path loss, or received signal to interference ratio (SIR) or the like. Other cells measuring section 302 then feeds back the measured results to base station 100.

As with Embodiment 1, PDCCH receiving section 207 performs blind decoding (i.e., monitor) on each search space set in a PDCCH region and an R-PDCCH region and acquires DCI addressed to the terminal, the DCI transmitted in PDCCH or R-PDCCH. In this case, a DCI format targeted when PDCCH receiving section 207 performs blind decoding on the search space set in an R-PDCCH region is set as a DCI format using RB allocation information in which an allocatable RB region is limited to an RB region other than the other cells quality measurement RB region, i.e., as a DCI format having a DCI size having a smaller number of bits compared to a PDCCH region.

Hereinafter, a setting process of an allocatable RB region in setting section 101 of base station 100 will be described in detail.

As described above, in each cell, an RB region in which another cell decreases (i.e., mutes) transmission power is not subject to the other cells quality measurement. In other words, in each cell, whereas reception power (i.e., interference power) of signals from another cell is large in an RB region in which the other cells quality measurement is performed, the interference power from another cell is small in an RB region not subject to the other cells quality measurement (i.e., RB region in which another cell mutes transmission power).

Setting section 101 thus sets, among a plurality of RBs (i.e., all RBs in a system band) forming an allocatable RB region (i.e., standard setting value candidate group) that can be notified to each terminal 300 using DCI transmitted in PDCCH, some RBs that form an RB region not subject to the other cells quality measurement (i.e., a resource region other than a resource region subject to received quality measurement for signals from another base station (i.e., the other cell type) other than base station 100), as an allocatable RB region that can be notified to each terminal 300 using DCI transmitted in R-PDCCH (i.e., setting value candidate group for RBs).

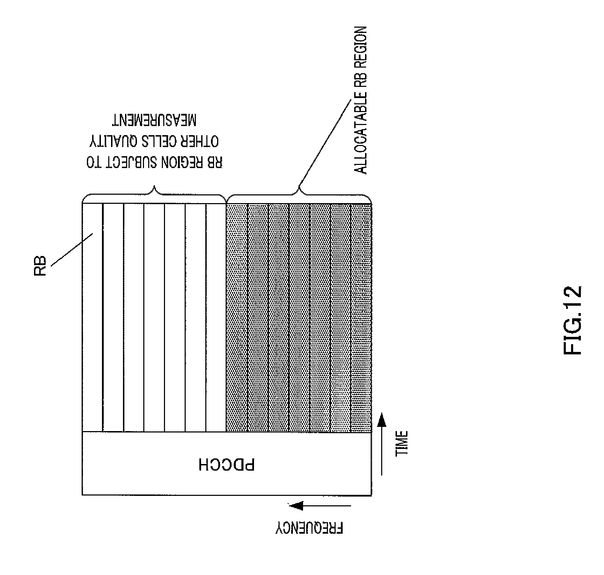

For example, as shown in FIG.12, setting section 101 sets an RB region at the side of higher frequency (7 RBs) in a system band (14 RBs), as an RB region subject to the other cells quality measurement.

In contrast, as shown in FIG.12, setting section 101 sets an RB region (i.e., RB region at the side of lower frequency (7 RBs)) other than an RB region subject to the other cells quality measurement in the system band (14 RBs), as an allocatable RB region that can be notified to terminal 300 using DCI transmitted in R-PDCCH.

In addition, setting section 101 sets all 14 RBs in the system band as an allocatable RB region that can be notified to terminal 300 using DCI transmitted in PDCCH.

In other words, setting section 101 sets the number of RB candidates that can be notified to terminal 300 using DCI transmitted in R-PDCCH (i.e., 7 RBs) smaller than the number of RB candidates that can be notified to terminal 300 using DCI transmitted in PDCCH (i.e., 14 RBs), as with Embodiment 1.

In other words, when transmitting DCI in R-PDCCH to terminal 300, base station 100 limits the target of RB allocation of downlink data only to part of RB region among an RB region in the system band, i.e., an RB region other than an RB region subject to the other cells quality measurement.

Consequently, as with Embodiment 1, decreasing the number of bits indicating the result of resource allocation of downlink data for terminal 300 can reduce a resource region (i.e., the total number of RBs) used as an R-PDCCH region in a PDSCH region, the number of bits included in DCI transmitted in R-PDCCH. As described above, the deterioration of system throughput can be minimized since decreasing the number of DCI bits can limit the reduction of a resource region (i.e., PDSCH region) available for downlink data.

As described above, an allocatable RB region that can be notified to terminal 300 using DCI transmitted in R-PDCCH is an RB region in which another cell mutes transmission power and which is less interfered with by the other cell. As shown in FIG.12, as with Embodiment 1, the reduction of the flexibility of RB allocation has a little impact on throughput in a terminal to which DCI is transmitted in R-PDCCH even when the allocatable RB region that can be notified to terminal 300 using DCI transmitted in R-PDCCH is limited only to an RB region other than an RB region subject to the other cells quality measurement.

Consequently, as with Embodiment 1, according to the present embodiment, the deterioration of system throughput can be minimized without reducing the throughput in a terminal to which DCI is transmitted in R-PDCCH, even when DCI for a terminal connected with a base station is transmitted in an R-PDCCH region. In addition, new control information for notifying an allocatable RB region is unnecessary and the amount of control information can be reduced since the allocatable RB region is set from the other cells quality measurement RB region information.

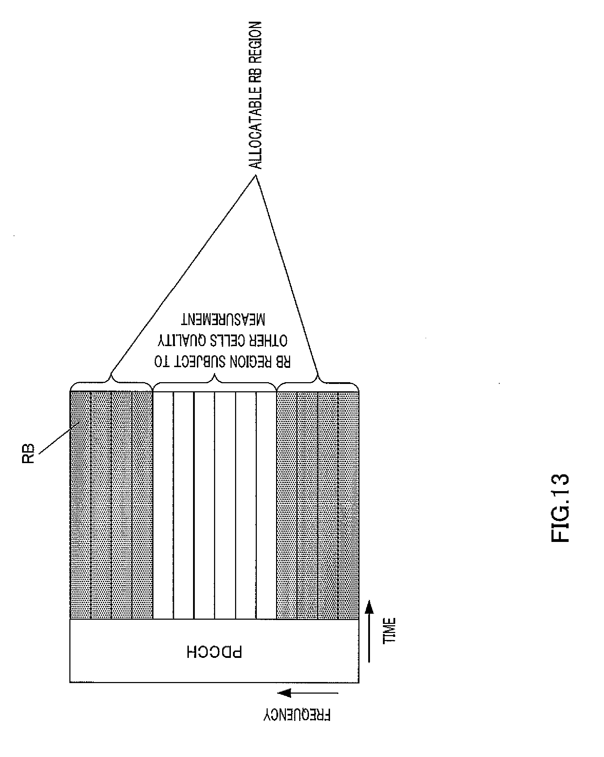

In a heterogeneous network composed of a macro cell and a pico/femto cell, reducing transmission power in RBs among RB region available for the macro cell (or not perform transmission using some of the RBs) can reduce interference power of the pico/femto cell. This can improve the throughput of the pico/femto cell and expand a coverage area of the pico/femto cell. For example, as shown in FIG.13, a macro cell performs transmission with normal transmission power in an RB region (i.e., 6 RBs in the center part of FIG.13) in the center part of a system band (or "component carrier" defined as the standard unit of a communication band), and performs transmission with low transmission power (i.e., muting) in RB regions on both ends, i.e., in the RB regions other than the above center part (i.e., 8 RBs on both ends in total (4 RBs for each end) in FIG.13). In this case, a pico/femto cell sets an RB region in the center part of the system band (or "component carrier") (i.e., 6 RBs) shown in FIG.13, as an RB region subject to the other cells quality measurement. The pico/femto cell also sets an RB region on both ends other than the above described RB region in the center part (i.e., 8 RBs in total), as an allocatable RB region for downlink data for a terminal to which DCI is transmitted in R-PDCCH.

In the macro cell, SCH/PBCH used for cell detection (i.e., for establishing synchronization with the macro cell) is transmitted in an RB region in the center part of the system band (or "component carrier") (i.e., 6 RBs) shown in FIG.13. For this reason, a pico/femto cell may define the above RB region in the center part (i.e., 6 RBs) as an RB region subject to the other cells quality measurement, and as a result, a terminal connected with the pico/femto cell may detect a synchronization channel (SCH)/physical broadcast channel (PBCH) of the macro cell and then measure received quality only of the indicated bandwidth, leaving the center frequency as is (i.e., without switching the center frequency). The terminal connected with the pico/femto cell is thus not required to perform a frequency switching process.

In the present embodiment, a subframe may be provided in a macro cell, the subframe not including an RB region with decreased transmission power and an RB region without transmission (i.e., RB region set as a non-transmission region). In the subframe, another cell (i.e., pico/femto cell) does not transmit DCI in R-PDCCH since interference from the macro cell to the other cell may highly increase. Accordingly, a terminal connected with the other cell (i.e., pico/femto cell) does not perform blind decoding for R-PDCCH in the subframe. In addition, the terminal connected with the other cell (i.e., pico/femto cell) defines all RBs in the subframe as an RB region subject to the other cells quality measurement and performs the other cells quality measurement using reference signals (RS) received in all RBs. Consequently, in the other cell (i.e., pico/femto cell), the accuracy of the other cells quality measurement for the macro cell (i.e., another cell for the pico/femto cell) can be improved. In addition, the number of blind decoding attempts for R-PDCCH can be decreased in the subframe, and therefore power consumption of a terminal can be reduced and an error detection rate of DCI can be reduced.

In the present embodiment, an RB region subject to the other cells quality measurement may be changed with time. Accordingly, each terminal can measure received quality of the other cells throughout all frequency bands in a system band and can improve the measurement accuracy. In addition, an allocatable RB region that can be notified to the terminal using DCI transmitted in R-PDCCH is changed depending on the change of the RB region subject to the other cells quality measurement. Consequently, in each cell, RBs for all frequency bands in the system band can be allocated for a terminal to which DCI is transmitted in R-PDCCH and therefore the flexibility of resource allocation can be improved,

### [Embodiment 3]

Embodiments 1 and 2 have described a case in which an RB allocated to each terminal is used as a transmission parameter (i.e., setting value) that can be notified to a terminal using DCI. In contrast, the present embodiment will describe a case in which MCS set for each terminal is used as a transmission parameter (i.e., setting value) that can be notified to a terminal using DCI.

The basic configurations of a base station and a terminal according to the present embodiment are common to Embodiment 1, and will therefore be described with reference to FIGs.6 and 8.

In base station 100 of the present embodiment, setting section 101 sets MCS that can be set for each terminal 200 (hereinafter, simply referred to as "settable MCS") when PDCCH or R-PDCCH is used for transmitting DCI to each terminal 200. In this case, setting section 101 sets part of the standard setting value candidate group, as a settable MCS that can be notified to terminal 200 in R-PDCCH (i.e., setting value candidate group for MCSs). For example, the setting value candidate group that can be notified using DCI transmitted in PDCCH (i.e., setting value candidate group for MCSs) are used as the standard setting value candidate group.

In other words, setting section 101 sets the number of MCS candidates that can be notified using DCI transmitted in R-PDCCH smaller than the number of MCS candidates that can be notified using DCI transmitted in PDCCH. The range of MCSs settable in R-PDCCH is thus narrower than the range of settable MCSs in PDCCH.

For example, setting section 101 sets, among a plurality of MCSs forming settable MCS (i.e., standard setting value candidate group) that can be notified to terminal 200 using DCI transmitted in PDCCH, some MCSs with lower MCS levels (e.g., MCSs with MCS levels not exceeding QPSK), as an MCS candidate group that can be notified to terminal 200 using DCI transmitted in R-PDCCH. In other words, among a plurality of MCSs settable in PDCCH, MCSs with lower MCS levels are set as MCSs settable in R-PDCCH. The threshold of settable MCSs (e.g., MCS levels not exceeding QPSK) may be predetermined, the settable MCSs being able to be notified to terminal 200 using DCI transmitted in R-PDCCH. Setting section 101 notifies information on the settable MCS to each terminal 200 as higher layer signals such as RRC signaling or the like.

Control section 102 selects an MCS for each terminal 200 among the settable MCS (i.e., setting value candidate group for MCSs) set at setting section 101. Control section 102 then generates allocation control information including MCS information indicating the selected MCS level, and PDCCH generating section 104 generates DCI including the allocation control information.

In terminal 200 of the present embodiment, setting information receiving section 206 reads information on the settable MCS notified from base station 100, in addition to setting information as in Embodiment 1. Setting information receiving section 206 outputs the information on the settable MCS to PDCCH receiving section 207 as settable MCS information.

PDCCH receiving section 207 determines an MCS level notified by DCI (i.e., MCS level set for the terminal), referring to the MCS level of the MCS indicated by the settable MCS information received from setting information receiving section 206, the DCI acquired by performing blind decoding on a search space set in an R-PDCCH region. PDCCH receiving section 207 outputs the determined MCS level to PDSCH receiving section 208.

Hereinafter, a setting process of an allocatable RB region in setting section 101 of base station 100 will be described in detail.

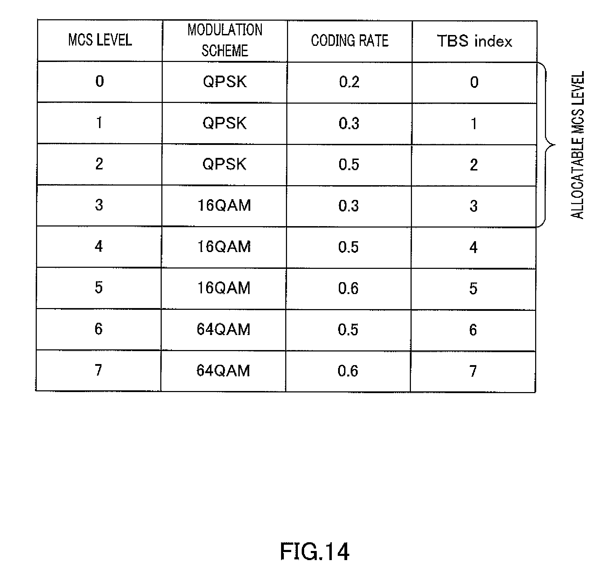

In the following descriptions, setting section 101 uses, for example, an MCS table shown in FIG.14. The MCS table shown in FIG.14 includes eight types of MCSs, i.e., MCS levels 0 to 7. Each MCS level is associated with a modulation scheme (i.e., QPSK, 16QAM, and 64QAM), a coding rate (i.e., 0.2, 0.3, 0.5, and 0.6), and a transport block size (TBS) index (i.e., 0 to 7). The TBS index indicates a data size, the correspondence between the TBS index and an actual data size is separately defined as a table depending on the number of allocated RBs. Instead of the MCS table shown in FIG.14, a MCS table, which includes only the TBS indices depending on the number of allocated RBs among coding rates and TBS indices, may be used since the coding rates are determined depending on the number of allocated RBs and the data size.

For example, setting section 101 sets MCSs of eight MCS levels 0 to 7 shown in FIG.14, as settable MCSs (i.e., setting value candidate group for MCSs) that can be notified to terminal 200 using DCI transmitted in PDCCH. In contrast, setting section 101 sets MCSs of four MCS levels 0 to 3 among MCSs of eight MCS levels 0 to 7 shown in FIG.14, as settable MCSs (i.e., setting value candidate group for MCSs) that can be notified to terminal 200 using DCI transmitted in R-PDCCH. In other words, setting section 101 sets the number of MCS candidates that can be notified to terminal 200 using DCI transmitted in R-PDCCH (i.e., four levels) smaller than the number of MCS candidates that can be notified to terminal 200 using DCI transmitted in PDCCH (i.e., eight levels).

Control section 102 sets one of MCSs of MCS levels 0 to 7 for certain terminal 200 to which DCI is transmitted in PDCCH. Base station 100 includes, in DCI, the MCS level of the set MCS as MCS information having three bits (i.e., the number of bits that can indicate eight patterns of information), and transmits the DCI to the terminal 200.

In contrast, control section 102 sets one of MCSs of MCS levels 0 to 3 for certain terminal 200 to which DCI is transmitted in R-PDCCH. Base station 100 includes, in DCI, the MCS level of the set MCS as MCS information having two bits (i.e., the number of bits that can indicate four patterns of information), and transmits the DCI to the terminal 200.

In other words, in base station 100, a single bit is reduced from the number of bits of MCS information (i.e., the number of bits of DCI including MCS information) when DCI is transmitted in R-PDCCH compared with when DCI is transmitted in PDCCH. In base station 100, the DCI size of DCI transmitted in R-PDCCH is thus smaller than the DCI size of DCI transmitted in PDCCH.

Consequently, as with Embodiment 1, decreasing the number of bits indicating MCS information included in DCI transmitted in R-PDCCH can reduce, in a PDSCH region, a resource region (i.e., the total number of RBs) used as an R-PDCCH region. In other words, the deterioration of system throughput can be minimized since decreasing the number of DCI bits can limit the reduction of a resource region (i.e., PDSCH region) available for downlink data.

In addition, as shown in FIG.14, base station 100 sets, among settable MCSs (i.e., MCS levels 0 to 7) that can be notified to terminal 200 using DCI transmitted in PDCCH, some MCSs with lower MCS levels (i.e., MCS levels 0 to 4), as settable MCSs (i.e., setting value candidate group for MCSs) that can be notified to terminal 200 using DCI transmitted in R-PDCCH.

As described above, a terminal to which DCI needs to be transmitted in R-PDCCH, i.e., a terminal in which inter-cell interference needs to be reduced by interference control, is likely to be located in the vicinity of the cell boundary. In the terminal to which DCI need to be transmitted in R-PDCCH, interference control is performed on data signals as with R-PDCCH and therefore the received quality is improved. In such a terminal, a high MCS level, such as 16QAM, 64QAM or the like, is rarely used (i.e., not frequently used), unlike a terminal located near the cell center.

Consequently, as shown in FIG.14, limiting settable MCSs, which can be notified to terminal 200 using DCI transmitted in R-PDCCH, only to MCSs with lower MCS levels (e.g., MCS levels 0 to 2 (i.e., QPSK) and 3 (i.e., 16QAM)) only prevents the usage of MCS levels that are not frequently used. In other words, the reduction of the flexibility of setting an MCS level has a little impact on throughput in the terminal to which DCI is transmitted in R-PDCCH, the reduction of the flexibility caused by limiting the settable MCSs to some MCSs having lower MCS levels.

Consequently, as with Embodiment 1, according to the present embodiment, it is possible to minimize the deterioration of system throughput without reducing the throughput in a terminal to which DCI is transmitted in R-PDCCH, even when DCI for a terminal connected with a base station is transmitted in an R-PDCCH region.

As shown in FIG.14, the present embodiment has described a case in which a plurality of MCSs with continuous MCS levels are set as MCSs that can be notified to terminal 200 using DCI transmitted in R-PDCCH. However, a base station may set not only MCSs with continuous MCS levels but also MCSs with discontinuous MCS levels (e.g., MCSs of MCS levels 0, 2, 4, and 6 shown in FIG.14) as the MCSs that can be notified to terminal 200 using DCI transmitted in R-PDCCH. In other words, the base station may coarsely set an allocation granularity of MCSs that can be notified to terminal 200 using DCI transmitted in R-PDCCH (e.g., use MCSs with MCS levels 0, 2, 4, and 6 every second level).

Embodiments of the claimed invention have been described above.

### [Other Embodiments]

(1) A cell-radio network temporary identifier (C-RNTI) may be used as a terminal ID in the above each embodiment.

(2) The expression "DCI format common to all terminals" described in the above each embodiment may be read as "DCI format not depending on a transmission mode."

(3) Although DCI 0/1A has been explained as a format not depending on a transmission mode, the above each embodiment is not limited to this, and any format used without depending on the transmission mode may be possible.

Alternatively, a DCI format other than DCIs 1, 2, 2A, 0A, and 0B may be used as a format depending on a transmission mode.

The above embodiments have described a case in which DCI transmitted in R-PDCCH has a smaller amount of information than DCI transmitted in PDCCH. However, the effect of the claimed invention can be acquired even when a DCI format with a small amount of information is transmitted only in R-PDCCH. For example, a DCI format with a small amount of information may be transmitted only in R-PDCCH, the DCI format newly defined for an M2M device. Transmitting data with a small number of bits with low transmission power is important in the M2M device, and therefore the above described DCI format with a small amount of information may be set as, for example, the DCI format in which resource allocation is limited.

The transmission mode of uplink or downlink may include contiguous band allocation transmission. In a terminal in which this transmission mode is set, DCI formats depending on transmission modes in uplink and downlink are DCI 0 and DCI 1A, respectively. In this case, the DCI format common to all terminals is the same as the formats depending on the transmission modes, and therefore, in UE-SS, blind decoding may be performed on each type of formats in uplink and downlink. When both of uplink and downlink adopt the contiguous band allocation, the blind decoding is performed only on a single type of format in total.

Setting DCI 0/1A to DCI depending on a transmission mode and having a wider search space can prevent an increase in a block rate for a terminal for which PDCCH can be allocated in only DCI 0/1A due to originally poor condition of a propagation path.

(4) The claimed invention is not limited to the above embodiments and can be implemented with various changes. For example, the each embodiment can be implemented in appropriate combinations depending on the condition of a terminal.

(5) CCE and R-CCE explained in the above each embodiment are logical resources. When the CCE and the R-CCE are arranged in an actually physical time-frequency resource, the CCE is arranged in a distributed manner all over the bands, and the R-CCE is arranged in a distributed manner in specific RBs. Alternatively, the same effect as that of the claimed invention can be acquired according to another method of arrangement,

(6) Instead of R-PDCCH, any control channel transmitted through a frequency resource that may be used for transmitting data can be used to acquire the same effect by applying the claimed invention,

In the above embodiments, the number of DCI bits is decreased by limiting an allocatable RB region or an allocatable MCS level for DCI transmitted in R-PDCCH. However, part of DCI may be used as a virtual CRC, instead of the decrease in the number of DCI bits. In this case, a terminal ignores the detected DCI when RB allocation or MCS allocation other than an allocatable RB region or an allocatable MCS level, respectively, is notified. This can reduce an error detection rate of the DCI transmitted in R-PDCCH.

In the above embodiments, in a resource region on which PDCCH (i.e., the second control channel) is mapped, reference signals and a control channel such as PHICH or PCFICH or the like other than PDCCH may be transmitted.

(7) Although the claimed invention has been described above with embodiments using antennas, the claimed invention is equally applicable to antenna ports.

The antenna port indicates a logical antenna formed by one or multiple physical antennas, In other words, the antenna port is not limited to represent one physical antenna, and may include an array antenna formed by a plurality of antennas, for example.

For example, in 3GPP LTE, the number of physical antennas for forming the antenna port is not defined, and the antenna port is defined as a minimum unit by which a base station can transmit different reference signals.

The antenna port may also be defined as a minimum unit for multiplying weighting of a precoding vector.

(8) Although the above each embodiment has been explained using a case where the claimed invention is implemented with hardware, as an example, the claimed invention can be implemented with software.

Furthermore, each function block employed in the explanation of the above each embodiment may typically be implemented as an LSI constituted by an integrated circuit. These function blocks may be individual chips or partially or totally contained on a single chip. The term "LSI" is adopted herein but this may also be referred to as "IC," "system LSI," "super LSI," or "ultra LSI," depending on the differing extents of integration.

The method of implementing integrated circuit is not limited to LSI, and implementation by means of dedicated circuitry or a general-purpose processor may also be possible. After LSI manufacture, utilization of a field programmable gate array (FPGA) or a reconfigurable processor where connections and settings of circuit cells in an LSI can be reconfigured is also possible.

If a new integrated circuit implementation technology replacing LSI is introduced because of advancement in semiconductor technology or a different technology derived therefrom, the function blocks may of course be integrated using that technology. For example, application of biotechnology is possible.

The disclosure of Japanese Patent Application No. 2010-197772, filed on September 3, 2010, including the specification, drawings and abstract, is incorporated herein by reference in its entirety,

### Industrial Applicability

The claimed invention is available for a mobile communication system or the like.

**Reference Signs List**

| | |
|---|---|
| 100 | Base station |
| 101 | Setting section |
| 102 | Control section |
| 103 | Search space setting section |
| 104 | PDCCH generating section |
| 105, 107, 108 | Coding/modulating section |
| 106 | Allocation section |
| 109 | Multiplexing section |
| 110, 213 | IFFT section |
| 111, 214 | CP adding section |
| 112, 215 | RF transmitting section |
| 113, 201 | Antenna |
| 114, 202 | RF receiving section |
| 115, 203 | CP removing section |
| 116, 204 | FFT section |
| 117 | Extracting section |
| 118 | IDFT section |
| 119 | Data receiving section |
| 120 | ACK/NACK receiving section |
| 131 | Transmission region setting section |
| 132 | Transmission mode setting section |
| 200, 300 | Terminal |
| 205 | Demultiplexing section |
| 206, 301 | Setting information receiving section |
| 207 | PDCCH receiving section |
| 208 | PDSCH receiving section |
| 209, 210 | Modulating section |
| 211 | DFT section |
| 212 | Mapping section |
| 302 | Other cells measuring section |

## Claims

1. A base station comprising:
a generation section that generates control information transmitted in a first control channel mapped on a resource region that is the same as a resource region to which data for a terminal is allocated or control information transmitted in a second control channel mapped on a resource region that is different from the resource region; and
a transmission section that transmits the generated control information,
wherein the amount of information of the control information in the first control channel is smaller than the amount of information of the control information in the second control channel.

2. The base station according to claim 1, wherein
the generation section generates the control information that includes a setting value set for the terminal; and
a range of the setting value settable in the first control channel differs from a range of the setting value settable in the second control channel.

3. The base station according to claim 2, wherein the range of the setting value settable in the first control channel is limited more severely than the range of the setting value settable in the second control channel.

4. The base station according to claim 2, wherein the range of the setting value settable in the first control channel is part of the range of the setting value settable in the second control channel.

5. The base station according to claim 2, wherein the setting value is a resource block allocated to the terminal.

6. The base station according to claim 5, wherein a range of the resource block allocatable in the first control channel is narrower than a range of the resource block allocatable in the second control channel.

7. The base station according to claim 5, wherein part of a plurality of the resource blocks allocatable in the second control channel is set as the resource blocks allocatable in the first control channel, the part less interfered with by a base station other than the base station.

8. The base station according to claim 5, wherein part of a plurality of the resource blocks allocatable in the second control channel is set as the resource blocks allocatable in the first control channel, the part forming a search space set for the first control channel.

9. The base station according to claim 5, wherein part of a plurality of the resource blocks allocatable in the second control channel is set as resource blocks allocatable in the first control channel, the part other than a resource block subject to received quality measurement for signals from a base station other than the base station.

10. The base station according to claim 2, wherein the setting value is a modulation and channel coding scheme (MCS) set to the terminal.

11. The base station according to claim 10, wherein a range of the MCS settable in the first control channel is narrower than a range of the MCS settable in the second control channel.

12. The base station according to claim 10, wherein part of a plurality of the MCSs settable in the second control channel is set as MCSs settable in the first control channel, the part having a lower MCS level.

13. The base station according to claim 2, wherein the setting value is band allocation set to the terminal.

14. The base station according to claim 13, wherein the band allocation includes contiguous band allocation for allocating resource blocks with continuous numbers and non-contiguous band allocation for allocating resource blocks with discontinuous numbers.

15. The base station according to claim 14, wherein, among a plurality of pieces of the band allocation settable in the second control channel, the contiguous band allocation is set as band allocation settable in the first control channel.

16. A method of transmitting control information comprising:
generating control information transmitted in a first control channel mapped on a resource region that is the same as a resource region to which data for a terminal is allocated or control information transmitted in a second control channel mapped on a resource region that is different from the resource region; and
transmitting the generated control information,
wherein the amount of information of the control information in the first control channel is smaller than the amount of information of the control information in the second control channel.
